# EUROPEAN PATENT SPECIFICATION

(11) **EP 2 702 726 B1**
(45) Date of publication and mention of the grant of the patent: **19.06.2019**
(21) Application number: 12776767.1
(22) Date of filing: 26.04.2012
(51) Int. Cl.: H04L 29/06, H04L 29/08, H04L 29/12, G09C 1/00

(54) **SYSTEM AND METHOD FOR DATA INTERCEPTION AND AUTHENTICATION WITH REVERSE PROXY**
SYSTEM UND VERFAHREN ZUM ABFANGEN VON DATEN UND ZUR AUTHENTIFIZIERUNG MIT EINEM REVERSE-PROXY
SYSTÈME ET PROCÉDÉ D'INTERCEPTION ET D'AUTHENTIFICATION DE DONNÉES AVEC MANDATAIRE INVERSE

(30) Priority: 27.04.2011 US 201161479634 P; 19.04.2012 US 201213450781; 19.04.2012 US 201213450848
(43) Date of publication of application: 05.03.2014
(73) Proprietor: Symantec Corporation, Mountain View, CA 94043 (US)
(72) Inventor: WOELFEL, John Harold, Alliston, Ontario L9R 1B8 (CA); WOLOSZYN, Terrence Peter, Orangeville, Ontario L9W 2Z2 (CA)
(74) Representative: Manitz Finsterwald Patent- und Rechtsanwaltspartnerschaft mbB
(86) International application number: PCT/CA2012/000390
(87) International publication number: WO 2012/145827

(56) References cited:
- US-A- 6 081 900
- US-A1- 2002 157 019
- US-A1- 2004 044 768
- US-A1- 2004 049 702
- US-A1- 2006 136 990
- US-A1- 2007 136 480
- US-A1- 2009 249 439
- NICK KEW: "Running a Reverse Proxy with Apache", INTERNET CITATION, 17 December 2009 (2009-12-17), XP002731392, Retrieved from the Internet: URL:https://web.archive.org/web/2009121712 1606/http://www.apachetutor.org/admin/reve rseproxies [retrieved on 2014-10-21]

## Description

### RELATED APPLICATIONS

The present application claims benefit from the US provisional application serial number 61/479,634 filed on April 27, 2012, and two US patent applications serial numbers 13/450,781 and 13/450,848 filed on April 12, 2012.

### FIELD OF THE INVENTION

The present invention relates to client-server communication in a network, and in particular to user authentication when client-server communication is mediated by a proxy.

### BACKGROUND OF THE INVENTION

In computer networks, a Reverse Proxy is a type of proxy server that retrieves resources on behalf of a client from one or more servers. These resources are then returned to the client as though they originated from the Reverse Proxy itself. The user browser navigates to a Universal Resource Locator (URL) in a Hypertext Transfer Protocol (HTTP) message for example HTTP://www.mydomain.com. The Reverse Proxy at that address, in turn, makes a request to the real web server resources on behalf of the user, for example HTTP://www.saas.com. In order for a Reverse Proxy to operate properly, it needs to take all requests from the client browser, and change all references for it's own URL (mydomain.com) to that of the target URL (saas.com). For example, a browser may request a home page by issuing a GET request on HTTP://mydomain.com/index.html. The Reverse Proxy, in turn, rewrites the request as GET on HTTP://www.saas.com. This the typical one-to-one mapping of URLs and paths between the two servers.

A number of large organizations are adopting a Single Sign-On (SSO) strategy for managing and securing access and control of their enterprise applications. For those applications that are locally resident and managed by the enterprise, this is fairly straightforward to implement. Implementing a Single Sign-On infrastructure enables users to sign in once and have access to all authorized resources. A SSO strategy that involves cooperation between independent network entities cooperating in SSO are termed a "federated SSO strategy".

Numerous applications provide basic SSO functionality, for example Java Open Single Sign On (JOSSO) which is an open source software package. Federated SSO is facilitated for example by the Security Assertion Markup Language 2.0 (SAML 2.0) which is a standard for exchanging authentication and authorization data between security domains. A description of SAML2.0 may be found on the web at <http://en.wikipedia.org/wiki/SAML_2.0>. Another description of SSO with SAML may be found at <http://wiki.developerforce.com/page/Single_Sign-On_with_SAML_on_Force.com≥ which is a commercial website. The term federated implies that there are several entities, namely an Identity Provider and a Service Provider cooperating in authenticating a user.

Cloud applications reside outside of the enterprise infrastructure, typically in a server providing "Software as a Service" (SaaS), and therefore require additional security and access control considerations. Besides SSO, a number of organizations have a requirement for monitoring, moderating, and curtailing access to Internet resources by way of a Proxy or Reverse Proxy. As a result, most cloud applications cannot use simultaneously both a federated SSO strategy, which normally requires direct communications between the Identity Provider for the enterprise and the Cloud application, and a Reverse Proxy, which would interrupt this direct communications for SSO.

Conventional Reverse Proxy Servers are typically designed and implemented to provide front-door load balancing for incoming traffic to be distributed across a plurality of homogeneous web servers that are servicing the same requests.

A new challenge is to use a Reverse Proxy server to act as a gateway to a heterogeneous mix of web servers, each with a unique URL / Domain, and a set of disparate services. As cloud adoption by the enterprise continues to grow, so does the need to monitor, moderate, and manage access to these web-based applications and resources. The limited capabilities of existing Reverse Proxy servers would require the setup of separate reverse proxies on a cloud by cloud basis.

Therefore the need arises for the development of an enhanced Reverse Proxy server to overcome the above mentioned limitations of existing reverse proxies.
Takahashi (US2004/044768) provides a Set-Cookie header rewriting part of a reverse proxy receives an HTTP response from a web server, and deletes the domain parameter included in the header. The components of the domain parameter are rearranged into inverse order, and the rearranged components are embedded in the HTTP response. This puts the HTTP response in a format recognizable by the user terminal. A link/location header rewriting part rewrites the domain and path of a link and location into a format conforming to the HTTP response that was rewritten by the Set-Cookie header rewriting part. An HTTP response sending part sends the rewritten HTTP response to the user terminal.
NICK KEW: "Running a Reverse Proxy with Apache", INTERNET CITATION, 17 December 2009 (2009-12-17), XP002731392, provides a user guide for setting up and running a conventional reverse proxy server using Apache.

### SUMMARY OF THE INVENTION

It is an objective of the invention to provide methods and a reverse proxy system capable of being used as a gateway to a heterogeneous mix of web servers. The invention is defined by the independent claims.

According to one aspect, there is provided a method for authenticating a client device into a service provider computer through a reverse proxy computer, and thus obtaining access to a resource on the service provider computer, the method comprising:
by the client device, sending an assertion, comprising a clear text and a signature, to the reverse proxy computer; the assertion having been received from an identity provider (IDP) computer;
in the reverse proxy computer, converting the assertion into a revised assertion and sending the revised assertion to the service provider computer;
in the service provide computer, validating the revised assertion, and returning a Universal Resource Locator (URL) of the resource to the reverse proxy computer;
in the reverse proxy computer, replacing the URL with a modified URL, and returning the modified URL to the client device, thereby enabling the client to access the resource.

The clear text comprises a first URL identifying the client device and a second URL identifying the reverse proxy computer.

The step of converting further comprises:
(i) validating the assertion with a first key "A";
(ii) revising the assertion, including replacing the URLs in the clear text to generate a revised clear text; and
(iii) encrypting the revised clear text with a second key "B", thereby generating the revised assertion.

The step (ii) of revising further comprises replacing the first URL with the second URL, and replacing the second URL with a third URL identifying the service provider computer.

In an embodiment, the first key "A" is a key that is shared between the IDP computer and the reverse proxy computer, and the second key "B" is a key that is shared between the service provider computer and the reverse proxy computer.

In the method described above, the authenticating is a federated single sign-on procedure according to the Security Assertion Markup Language (SAML) standard.

The method further comprises providing another IDP computer and sharing another first key "A" between the another IDP computer and the reverse proxy.

In an embodiment, the step of revising further comprises replacing URLs which identify the reverse proxy computer in the assertion, with corresponding URLs identifying the service provider computer.

The step of validating (i) further comprises:
generating a test signature, including encrypting the clear text of the assertion with the first key "A";
comparing the test signature with the signature of the assertion; and
otherwise discarding the assertion and abandoning the method, provided the test signature and the signature of the assertion do not match.

According to yet another aspect, there is provided a reverse proxy computer for authenticating a client device into a service provider computer to obtain access to a resource on the service provider computer, the reverse proxy computer comprising:
a processor; and
a memory having computer readable instructions stored thereon, causing the processor to:
   convert an assertion, the assertion having been received from an identity provider (IDP) computer through the client device, the assertion comprising a clear text and a signature, into a revised assertion;
   send the revised assertion to the service provider computer;
   upon validation of the revised assertion by the service provider computer:
receive a Universal Resource Locator (URL) of the resource; and
   replace the URL with a modified URL; and
   return the modified URL to the client device;
   thereby enabling the client to access the resource.

In the reverse proxy computer described above, the clear text comprises a first URL identifying the client device and a second URL identifying the reverse proxy computer.

The memory of the reverse proxy computer further has computer readable instructions stored thereon, causing the processor to:
validate the assertion with a first key "A";
revise the assertion, including replace the URLs in the clear text to generate a revised clear text; and
encrypt the revised clear text with a second key "B", thereby generating the revised assertion.

The memory of the reverse proxy computer further has computer readable instructions stored thereon, causing the processor to replace the first URL with the second URL, and replace the second URL with a third URL which identifies the service provider computer.
In the reverse proxy computer described above, the first key "A" is a key that is shared between the IDP computer and the reverse proxy computer, and the second key "B" is a key that is shared between the service provider computer and the reverse proxy computer.

In the reverse proxy computer described above, the authenticating is a federated single sign-on procedure according to the Security Assertion Markup Language (SAML) standard.

The memory of the reverse proxy computer further has computer readable instructions stored thereon, causing the processor to replace URLs which identify the reverse proxy computer in the assertion, with corresponding URLs which identify the service provider computer.

The memory of the reverse proxy computer further has computer readable instructions stored thereon, causing the processor to validate the assertion by:
generating a test signature, including encrypting the clear text of the assertion with the first key "A";
comparing the test signature with the signature of the assertion; and
otherwise discarding the assertion, provided the test signature and the signature of the assertion do not match.

According to yet another aspect, there is provided a reverse proxy computer for modifying an assertion received from a client device into a revised assertion for sending to a service provider computer, the reverse proxy computer comprising:
a processor; a memory having computer readable instructions stored thereon for execution by the processor, forming:
an assertion processing module including instructions for converting the assertion into the revised assertion, the assertion comprising a clear text and signature; and
a persistent storage unit, comprising a key store for storing a first encryption key for validating the assertion, and a second encryption key for encrypting the revised assertion.

In an embodiment, the clear text comprises a first URL identifying the client device and a second URL identifying the reverse proxy computer.

The assertion processing module further comprises computer readable instructions stored in the memory, causing the processor to:
validate the assertion with a first key "A";
revise a clear text of the assertion, including replace the URLs in the clear text to generate a revised clear text; and
encrypt the revised clear text with a second key "B", thereby generating the revised assertion.

The assertion processing module further comprises computer readable instructions stored thereon, causing the processor to replace the first URL with the second URL, and replace the second URL with a third URL which identifies the service provider computer.

In an embodiment, the first key "A" is a key that is shared between an IDP computer and the reverse proxy computer, and the second key "B" is a key that is shared between the service provider computer and the reverse proxy computer.

In the reverse proxy computer, the authenticating is a federated single sign-on procedure according to the Security Assertion Markup Language (SAML) standard.

In the reverse proxy computer, the memory further comprises computer readable instructions stored thereon, causing the processor to replace URLs which identify the reverse proxy computer in the assertion, with corresponding URLs which identify the service provider computer.

The memory further has computer readable instructions stored thereon, causing the processor to validate the assertion by:
generating a test signature, including encrypting the clear text of the assertion with the first key "A";
comparing the test signature with the signature of the assertion; and
otherwise discarding the assertion, provided the test signature and the signature of the assertion do not match.

A computer network is also provided, comprising the reverse proxy computer of the embodiments of the invention as described above.

According to yet one more aspect of the invention, there is provided a method for providing a resource from one of a plurality of service provider hosts to a client device through a reverse proxy computer, comprising:
employing at least one processor for:
receiving a request from the client device in the reverse proxy computer, the request including a header comprised of:
   a domain name of the reverse proxy computer;
   a short form domain name representing a selected service provider domain (domain);
   a short form host name representing a selected service provider host (host) in the t selected domain; and
   a path name for locating the resource on the host;
translating the short form domain name into a domain name of the host;
translating the short form host name into a host name of the host; and
generating a modified request for transmission to the server provider host, the modified request including:
   the host name, the domain name, and the path name.

In the method described above, the short form domain name is an alphanumeric string preceded by a forward slash character ("/"), and the short form host name is another alphanumeric string preceded by another forward slash character ("/").

The method further comprises:
modifying a document, received in the reverse proxy from the host computer, into a modified document, including:
   finding a reference to the domain name of the host in the document; and
   replacing the reference to the domain name of the host, with the domain name of the reverse proxy, followed by a forward slash character ("/") and the short form name of the host;
transmitting the modified document to the client device.

For example, the request from the client device may be a Hypertext Transfer Protocol (HTTP) GET message. Alternatively, the request from the client device may be contained in a Hypertext Transfer Protocol (HTTP) POST message.

In an embodiment of the invention, the document is a Hypertext Markup Language (HTML) document.

The method further comprises:
finding within the document a subroutine call having as arguments a Universal Resource Locator (URL) of one of the plurality of the service provider hosts and a path name; and
replacing said subroutine call with a modified subroutine call, comprising:
   replacing said URL with the URL of the reverse proxy; and
   generating a modified path name by inserting another forward slash character ("/") followed by the short form name of said one of the plurality of the service provider hosts in front of the path name.

The method further comprises repeating the steps finding and replacing said subroutine for all subroutine calls in the document. In one embodiment, the subroutine call is a JavaScript function call.

The method further comprises:
receiving a request from the client in the reverse proxy, the request including a header which does not correspond to any pattern found in a configuration file of the reverse proxy;
resolving the request by performing the following steps until the selected domain and the selected host for obtaining the resource is determined, including:
   searching a short form name in the header and translating the short form name into the selected domain name, and
   provided said short form name is found in the configuration file, searching a path name in a content paths definitions file of the reverse proxy to determine the selected host, provided the path name is found in the content paths definitions file, thereby finding the selected domain and the selected host; and
generating a modified request for transmission to the server, the modified request including the selected domain name, the selected host name and the path name, provided the selected domain and the selected host have been determined.

The step of resolving further comprises determining both the selected domain and the selected host from a referrer URL that is located in the request, thereby finding the selected domain and the selected host.

The step of resolving further comprises using a home domain of the service provider as the selected domain and a world wide web (www) server as the selected host, thereby determining the selected domain and the selected host.

According to yet another aspect of the invention, there is provided a reverse proxy computer for providing a resource from one of a plurality of service provider hosts to a client device, the reverse proxy computer comprising:
a processor; and
a memory having computer readable instructions stored thereon, causing the processor to:
   receive a request from the client device in the reverse proxy computer, the request including a header comprised of:
      a domain name of the reverse proxy computer;
      a short form domain name representing a selected service provider domain (domain);
      a short form host name representing a selected service provider host (host) in the selected domain; and
      a path name for locating the resource on the host;
   translate the short form domain name into a domain name of the host;
   translate the short form host name into a host name of the host; and
   generate a modified request for transmission to a service provider, the modified request including:
      the host name, the domain name, and the path name.

The short form domain name is an alphanumeric string preceded by a forward slash character ("/"), and the short form host name is another alphanumeric string preceded by another forward slash character ("/").

The reverse proxy computer further comprises computer readable instructions stored in the memory, causing the processor to:
modify a document, received in the reverse proxy from the host computer, into a modified document, including:
   finding a reference to the domain name of the host in the document; and
   replacing the reference to the domain name of the host, with the domain name of the reverse proxy, followed by a forward slash character ("/") and the short form name of the host;
transmit the modified document to the client device.

In the reverse proxy computer described above, the request from the client device is either a Hypertext Transfer Protocol (HTTP) GET message, or contained in a Hypertext Transfer Protocol (HTTP) POST message.

The document is a Hypertext Markup Language (HTML) document, an Extensible Markup Language (XML) document, or a JavaScript Object Notation (JSON) document.

The reverse proxy computer further comprises computer readable instructions stored in the memory, causing the processor to:
find within the document a subroutine call having as arguments a Universal Resource Locator (URL) of one of the plurality of the service provider hosts and a path name; and
replace said subroutine call with a modified subroutine call, including:
   replacing said URL with the URL of the reverse proxy; and
   generating a modified path name by inserting another forward slash character followed by the short form name of said one of the plurality of the service provider hosts in front of the path name.

Conveniently, the subroutine call is a JavaScript function call.

According to yet another aspect of the invention, there is provided a reverse proxy computer for providing a resource from one of a plurality of service provider hosts to a client device, the reverse proxy computer comprising:
a processor;
a memory having computer readable instructions stored thereon for execution by the processor, forming:
   a forward Universal Resource Locator (URL) translator module having instructions for:
      receiving a request from the client device in the reverse proxy computer, the request including a header comprised of:
         a domain name of the reverse proxy computer;
         a short form domain name representing a selected service provider domain (domain);
         a short form host name representing a selected service provider host (host) in the selected domain; and
         a path name for locating the resource on the host;
      translating the short form domain name into a domain name of the host;
      translating the short form host name into a host name of the host; and
      generating a modified request for transmission to the server provider host;
   the modified request including:
      the host name, the domain name, and the path name.

In the reverse proxy computer described above, the short form domain name is an alphanumeric string preceded by a forward slash character ("/"), and the short form host name is another alphanumeric string preceded by another forward slash character.

The reverse proxy computer further comprises a content modifier module having computer readable instructions stored in the memory for:
modifying a document, received in the reverse proxy from the host computer, into a modified document, including:
   finding a reference to the domain name of the host in the document; and
   replacing the reference to the domain name of the host, with the domain name of the reverse proxy, followed by a forward slash character ("/") and the short form name of the host;
transmitting the modified document to the client device.

The request from the client is a Hypertext Transfer Protocol (HTTP) GET message, or the request from the client is contained in a Hypertext Transfer Protocol (HTTP) POST message, and the document is a Hypertext Markup Language (HTML) document.

In the reverse proxy computer, the content modifier module further has instructions for:
finding within the document a subroutine call having as arguments a Universal Resource Locator (URL) of one of the plurality of the service provider hosts and a path name; and
replacing said subroutine call with a modified subroutine call by:
   replacing said URL with the URL of the reverse proxy; and
   generating a modified path name by inserting another forward slash character followed by the short form name of said one of the plurality of the service provider hosts in front of the path name.

For example, the subroutine call is a JavaScript function call.

In the reverse proxy computer, the forward URL translator module further has instructions for:
receiving a request from the client in the reverse proxy, the request including a header which does not correspond to any pattern found in a configuration file of the reverse proxy;
resolving the request by performing the following steps until the selected domain and the selected host for obtaining the resource is determined, including:
   searching a short form name in the header and translating the short form name into the selected domain name, and
   provided said short form name is found in the configuration file,
   searching a path name in a content paths definitions file of the reverse proxy to determine the selected host, provided the path name is found in the content paths definitions file, thereby finding the selected domain and the selected host; and
generating a modified request for transmission to the server, the modified request including the selected domain name, the selected host name and the path name, provided the selected domain and the selected host have been determined.

The forward URL translator module further comprises instructions for determining both the selected domain and the selected host from a referrer URL that is located in the request, thereby finding the selected domain and the selected host.

The forward URL translator module further comprises instructions for using a home domain of the service provider as the selected domain and a world wide web (www) server as the selected host, thereby determining the selected domain and the selected host.

Accordingly, the methods and system have been provided which permit federated single sign-on to be used with an enhanced reverse proxy inserted between a client device and a cloud application. Also methods and a reverse proxy computer have been provided which can handle a heterogeneous mix of web servers.

### BRIEF DESCRIPTION OF THE DRAWINGS

Embodiments of the invention will now be described, by way of example, with reference to the accompanying drawings in which:
Figure 1 illustrates a single-sign-on system 100 for implementing federated Single Sign-ON (SSO) according to a first embodiment of the invention;
Figure 2 shows a message diagram 200 illustrating "Identity Provider-Initiated" login as an example operation of SAML federated authentication with a Reverse Proxy according to the invention;
Figure 3A shows a "Identity Provider-Initiated" login flow chart 300 corresponding to the message diagram 200 of Fig. 2;
Figure 4 is a flow chart illustrating individual steps of the step 308 of Fig. 3;
Figure 5 illustrates a multi-IDP system 500 for implementing federated Single Sign-ON (SSO) for multiple sets of clients according to another embodiment of the invention;
Figure 6 illustrates an exemplary multi-host Reverse Proxy system 600 according to yet another embodiment of the invention;
Figure 7A shows a data flow diagram 700 as an example of URL manipulations in the PRS Reverse Proxy 112 of Fig. 1;
Figure 7B shows code examples of the HTML page 712, and the modified HTML page 714 of Fig. 7A;
Figure 7C shows a flowchart 750 of the Response Processing Function 706 of Fig. 7A;
Figure 8 shows a domain resolution method 800, performed in the PRS-RP 112 for resolving a current URL of an HTTP request, according to the invention;
Figure 9 shows a sample domain and host configuration table according to the invention;
Figure 10 shows an excerpt of a sample content paths definitions file according to the invention;
Figure 11 shows a flowchart of a Process for Preserving JavaScript URLs 1100, according to the invention; and
Figure 12 shows a block diagram 1200 of the PRS Reverse Proxy 112, according to the invention.

### DETAILED DESCRIPTION OF THE EMBODIMENTS OF THE INVENTION

With the objective to overcome the limitations of reverse proxies of the prior art, an enhanced Reverse Proxy server has been developed by the PerspecSys corporation. This enhanced Reverse Proxy server will be referred to as a Perspecsys (PRS) Reverse Proxy, features and embodiments of which are described in the following section.

To resolve the apparent incompatibility of federated SSO to operate in conjunction with a Reverse Proxy, the invention proposes a system and methods wherein a modified Reverse Proxy (termed PerspecSys Reverse Proxy) behaves as an Intercepting Proxy, inserting itself in the middle of the trusted authentication conversation between the SSO Identity Provider and the Cloud application. In this way, the PRS Reverse Proxy can be used for its original purposes for managing access to the Cloud applications, i.e. applications provided and running in SaaS servers, while not hindering the security and user management that SSO provides for authentication with the Cloud application.

### Single Sign-ON (SSO)

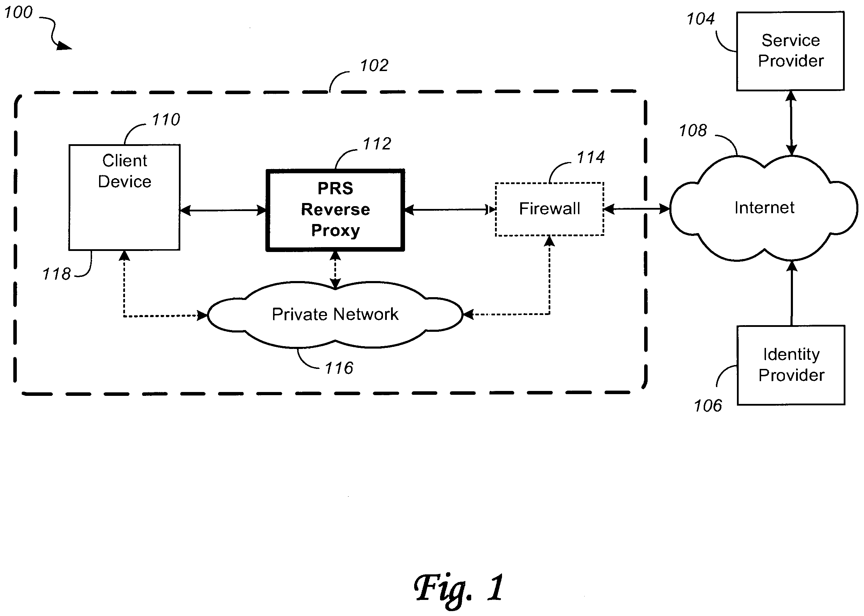

Figure 1 illustrates a single-sign-on system 100 for implementing federated Single Sign-ON (SSO) according to a first embodiment of the invention. The single-sign-on system 100 comprises an enterprise installation 102 (also simply referred to as enterprise 102), a service provider computer, also simply referred to as "service provider" (abbreviated SP) 104, and an identity provider computer, also simply referred to as "identity provider" (abbreviated IDP) 106, the enterprise 102, the SP 104, and the IDP 106 being connected to the Internet 108.

The enterprise 102 includes a client device 110, also simply referred to as "client" 110, an enhanced Reverse Proxy computer to be referred in the following as a PerspecSys (PRS) Reverse Proxy computer, also simply referred to as " PRS Reverse Proxy" (abbreviated PRS-RP) 112, and optionally a firewall 114.

The client device 110 may be a personal computer, a work station, a laptop computer, a "smart" device such as a mobile device or a tablet, or any other device capable of including a web browser application 118.

The SP 104 may be a server that is implemented on at least one computer or on a number of hosts each of which is a distinct computer. Similarly, the IDP 106 may be a server that is implemented on at least one computer or on a number of hosts each of which is a distinct computer.

The term computer is understood to mean a device that includes a processor, and computer-readable instructions stored in a computer-readable memory for execution on the processor. Any of the computers used in the present invention may be a general purpose computer such as any of a number of commercially available computers. Alternatively, each computer may be a specialized computer, or a hardware device such as a programmable application specific device.

The PRS-RP 112 is a computer equipped with software programs for enabling the single-sign-on feature of the first embodiment of the invention, as well as other embodiments to be described below. The functionality of the PRS-RP 112 may also be implemented with an Application Specific Integrated Circuit (ASIC) or a number of ASICs.

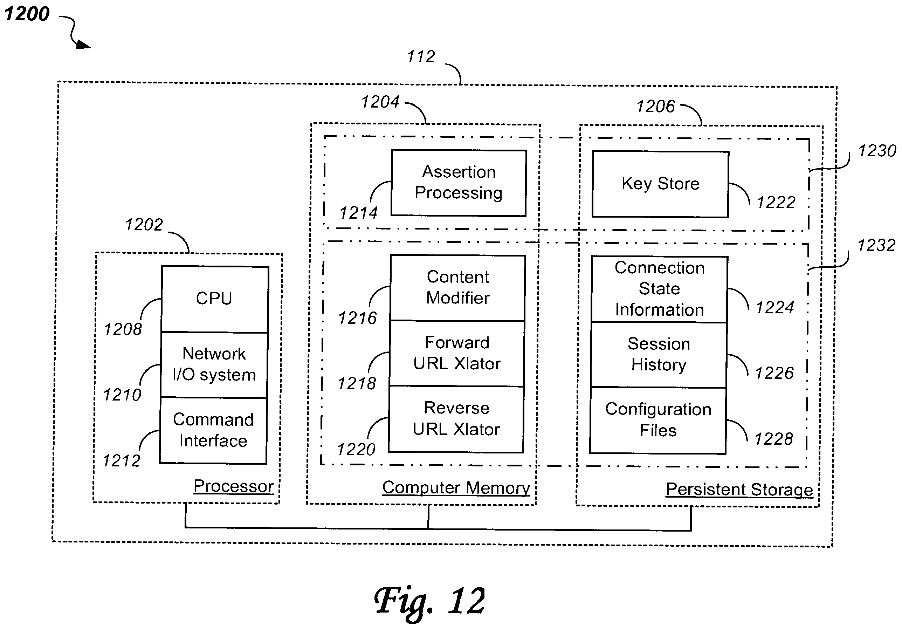

A hardware description of the PRS-RP 112 in the form of a computer is provided in Fig. 12 below.

### Overview of SAML

The Security Assertion Markup Language (SAML) provides a secure, Extensible Markup Language (XML)-based solution for exchanging user security information between an enterprise (i.e. the enterprise 102, or more precisely a one or more users in the enterprise 102, such as the client 110), an identity provider (i.e. the IDP 106) and a service provider (i.e. the SP 104) which may be a Cloud application providing SaaS services. SAML 2.0 supports World Wide Web Consortium (W3C) XML encryption and service-provider-initiated web single sign-on exchanges. This allows SaaS service providers such as the SP 104 to query the identity provider for authentication. Similarly, SAML 2.0 provides identity provider initiated web single sign-on exchanges. SAML 2.0 also includes a useful feature called "single logout" which defines a mechanism for logging out of all service providers quickly and easily.

The three entities involved in a SAML 2.0 transaction are
- the identity provider 106 (the asserting party),
- the service provider 104 (the party relying on the assertion), and
- the user, i.e. the client 110 (the subject of the assertion).

The identity provider 106 is the authority system that provides information confirming the user's identity. The service provider 104 is the system that trusts the identity provider's user information, and uses this information data to provide access to the service or application. The user with their identity information are known as the "subject".

The transaction from the identity provider 106 to the service provider 104, is called a SAML assertion. The structure of the SAML assertion is defined by a XML schema that is specified by the Organization for the Advancement of Structured Information Standards (OASIS) SAML standard. The SAML assertion contains header information, and statements about the subject in the form of attributes and conditions such as a start and logout Universal Resource Locator (URL).

Web browser SSO is SAML's most widely used feature and is typically used in conjunction with the Hypertext Transfer Protocol (HTTP) POST binding and authentication request protocol. Web browser SSO may be initiated by the identify provider or by the SaaS application if a user's session has not been established. If initiated by the identity provider, the assertion is signed.

In computer networks, a Reverse Proxy is a type of proxy server that retrieves resources on behalf of a client from one or more servers. These resources are then returned to the client as though they originated from the Reverse Proxy itself. The term "resource" itself is a collective term, that is used in the current context to refer to data provided by the service provider to a user or client, as well as services performed by the service provider on behalf of the client such as, for example, executing an application on data provided by the client, with results returned to the client.

With Identity Provider Initiated Login, where a user starts directly at their identity provider, logs in, and is then redirected to a landing page at the service provider, difficulties can arise when using a conventional Reverse Proxy server. The difficulty is with the contents of the SAML assertion which contains specific information to the actual SaaS application and it's URLs, including the return URL (i.e. the URL of the client). This will not match the URL provided by the Reverse Proxy (i.e. the URL of the Reverse Proxy). As a result, the assertion will fail, and the user will be unable to log into the actual web resource through a conventional Reverse Proxy.

This difficulty is overcome by the enhanced Reverse Proxy 112 as will be described in the following.

### System Overview

Each of the client device 110, the PRS-RP 112, and the optional firewall 114 may each be represented physically by distinct computers, interconnected through a private network 116. Alternatively, the PRS-RP 112 and the optional firewall 114 may run on the same compute platform.

Without limitation, the private network 116 may be a local network, a virtual private network over the Internet 108, or any means for providing communication channels between the client device 110, the PRS-RP 112, and the internet 108 through the optional firewall 114.

A conventional Reverse Proxy may often be directly associated with a service provider installation, for the purpose of providing resources from one or more servers to any client over the internet. A list of common uses of reverse proxies may be found in <http://en.wikipedia.org/wiki/Reverse_proxy>.

The PRS-Reverse Proxy 112 of the single-sign-on system 100 on the other hand is directly associated with an individual enterprise, performing as a local proxy for one or more client devices 110, as well as acting as Reverse Proxy for one or more servers of the Service Provider 104.

Typically, a connection between the client device 110 and the Internet 108 is provided through the optional firewall 114. The optional firewall 114 may be a conventional firewall for protecting the enterprise installation 102 from intrusion and malicious network traffic, and is otherwise not of interest in the present invention.

Authenticating the client device 110 into the SP 104 is provided through the PRS-RP 112, the functionality of which is the subject of an embodiment of the present invention. Once authenticated, the client device 110 has access to resources on the SP 104.

However, before the client 110 is able to use services provided by the SP 104, that require authorization, the "identity" of the client 110 must be provided by the IDP 106, and authenticated and accepted by the SP 104. This is what is meant by "authentication". The "identity" is an "assertion" that the IDP 106 provides to the client 110 once the IDP 106 has validated the client's identity. This forms a trust chain between the IDP 106 and the target service provided by the SP 104, as the client takes the assertion provided by the IDP 106 and uses it as authentication to access the service provider, instead of having to log in again with a different set of credentials to the service provider 104 for authentication. The SAML 2.0 protocol provides the process and standard by which this authentication trust chain is established and realized to allow the client to authenticate once, against the IDP 106, and then use the assertion to access other services without having to re-authenticate, as the service providers accept the provided assertion as proof that an authentication check has already successfully been performed by the IDP.

Before this SSO authentication method can work, the enterprise, on behalf of the client 110, has established a trust relationship with the IDP 106 in a separate off-line or out-of-band process, by providing the IDP 106 with a unique client-specific key. Similarly the SP 104 has an independent trust relationship with the IDP 106. The SSO authentication method then provides the ability for different enterprises and multiple service providers to dynamically establish secure one-on-one relationships.

As shown in the following, novel functionality of the PRS-RP 112 provides transparent forwarding of authentication messages and other messages between the client 110 and the SP 104, in cooperation with the IDP 106.

Briefly, the way the IDP 106 and SP 104 trust each other is that they share keys for encryption and decryption, where the keys were established when the SSO implementation was first configured. With these encryption keys, the IDP is able to perform the following.
- Authenticate the client.
- Upon successful authentication of the client, the IDP 106 can generate an "assertion" that the client 110 can then use to access service providers, for example the SP 104.
- The client 110 can present the assertion to the service provider (the SP 104 for example) in place of performing another type of authentication (e.g. username/password login).
- The service provider (the SP 104) opens the assertion document, and sees a clear-text XML component, as well as a digital XML signature which it not encrypted as it is a one-way hash type signature. A document providing details on XML signature syntax and processing may be found at <http://www.w3.org/TR/xmldsig-core/>. The digital XML signature is verified by hashing the clear-text XML content and comparing the resulting signature with the digital XML signature.

SAML 2.0 provides for a number of methods for performing authentication message exchanges, including HTML POST bindings, which is implied in the following. Other methods such as HTTP Redirect Binding, HTTP Artifact Binding, and SAML URI Binding are also possible and are included in the scope of the present invention all of which involve the passing of a SAML 2.0 assertion response. A document specifying Bindings for version 2 of the OASIS Security Assertion Markup Language (SAML 2.0) may be found at http://docs.oasis-open.org/security/saml/v2.0/saml-bindings-2.0-os.pdf which is part of the OASIS Standard, 15 March 2005.

Note that in the conventional SAML SSO scheme, there are three players: a user, an identity provider, and a service provider, which share the same encryption key. However, in the single-sign-on system 100 there are two overlapping sets of players:
- the IDP 106 and the PRS-RP 112, sharing one encryption key (an encryption key "A"), and
- the PRS-RP 112, and the SP 104, sharing a second encryption key (an encryption key "B").

The client 110 does not actually have the key used for the XML signature generation. The client 110 transmits the SAML authentication request and SAML response with the assertion (depending on whether it is IDP initiated as described in the example here or SP initiated) but does not use any key for signing or authenticating. The client is only a conduit and only forwards the signed assertion response from the IDP 106 to the PRS-RP 112.

It is preferable and usual, but not strictly necessary, that the encryption key "A" differs from the encryption key "B". The encryption key "B" is required to use services such as a SaaS application on the SP 104. While only a single encryption key "B" is described, it is noted that different applications running on the same SP 104 may require different encryption keys for authentication, depending on how many instances of the application are used. For example a production instance and sandbox instance may both be on the same SP 104, but are using two different single sign-on settings, therefore requiring different keys, one for the production instance, another one for sandbox instance.

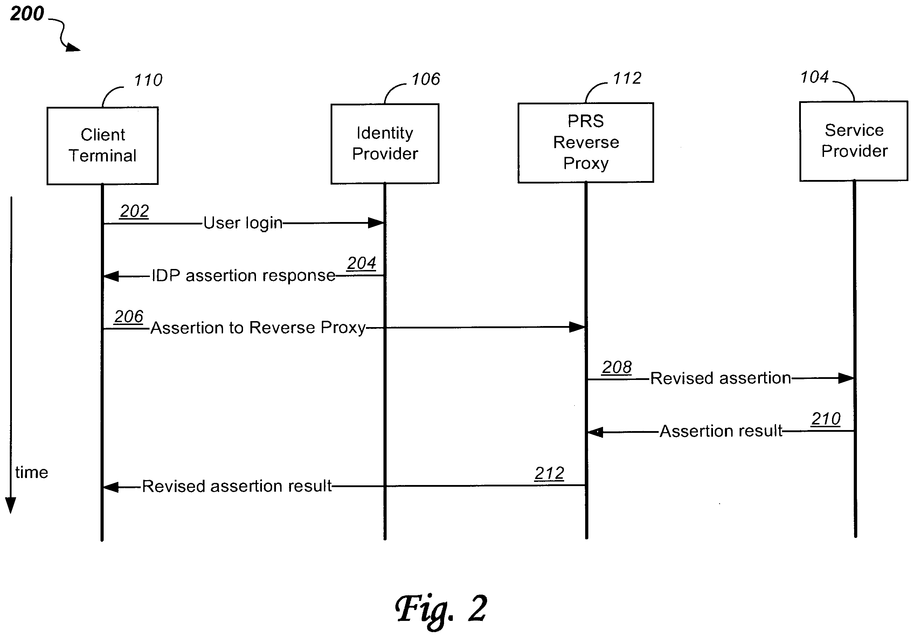

Figure 2 shows a message diagram 200 illustrating an "Identity Provider-Initiated" login as an example operation of SAML federated authentication with a Reverse Proxy, showing the actors involved (the client 110, the IDP 106, the PRS-RP 112, and the SP 104) in a message exchange including in time sequence the following messages:
a "User login" message 202 from the client 110 to the IDP 106;
an "IDP assertion response" message 204 from the IDP 106 to the client 110;
an "Assertion to PRS-RP" message 206 from the client 110 to the PRS-RP 112;
a "Revised assertion" message 208 from the PRS-RP 112 to the SP 104;
an "Assertion result" message 210 from the SP 104 to the 112; and
a "Revised assertion result" message 212 from the PRS-RP 112 to the client 110.

While a detailed description of only the "Identity Provider-Initiated" login method as a SAML federated authentication method with a Reverse Proxy is disclosed in the first embodiment of the invention, it is understood that other types of SAML authentication methods with a Reverse Proxy, including "Service Provider-Initiated" login are readily derived from the present disclosure, and are within the scope of the present invention.

The message sequence 202 to 212 illustrates "Identity Provider-Initiated" login in which the login of the client 110 to the SP 104 is first directed to the IDP 106 which provides the client 110 with an authentication certificate with which the client 110 is then able to assert his identity with the SP 104 through the PRS-RP 112. Each of the messages 202 to 212 is shown as a single message in Fig. 2 in this high-level view. In some cases the term "message" may refer to more than one message or a message exchange, as will be appreciated by practitioners skilled in the art of web design.

Alternate message sequences are also possible. For example in "Service Provider Initiated" login, the initial login is directed to the service provider which subsequently obtains confirmation of the clients identity directly from the identity provider. "Service Provider Initiated" login is not further described here.

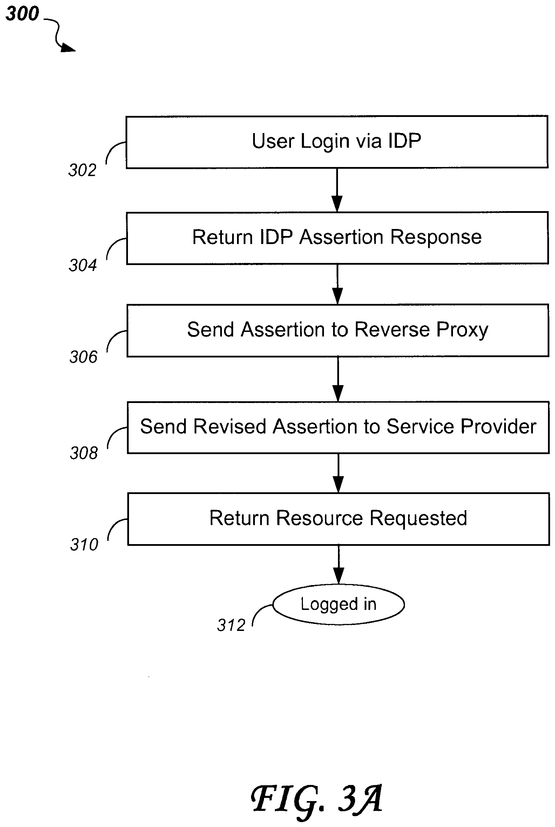

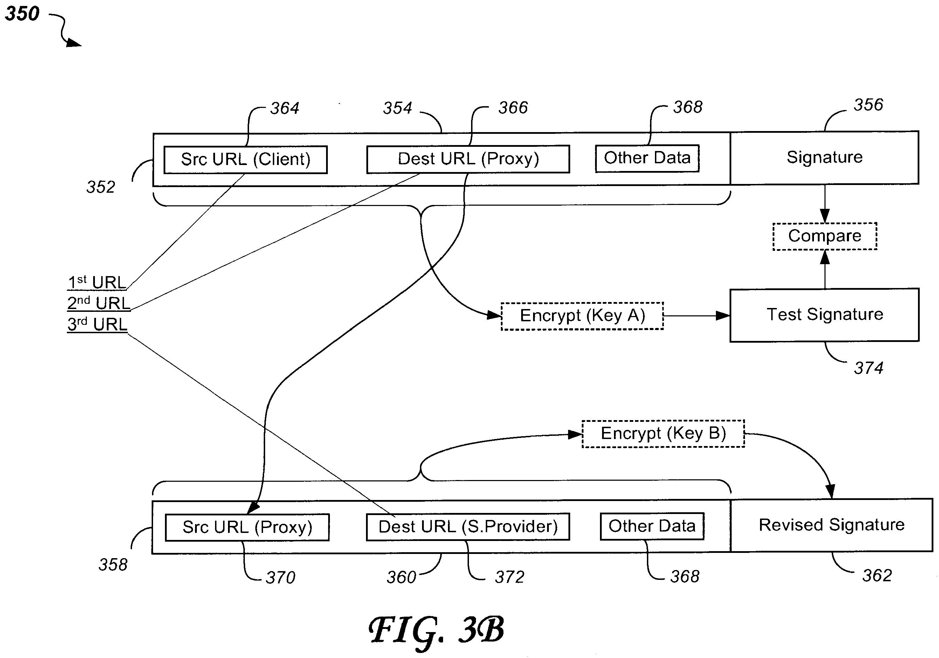

The operation of "Identity Provider-Initiated" login illustrated by the message diagram 200 may further be considered as a sequence of steps shown in Fig. 3.

Figure 3A shows a "Identity Provider-Initiated" login flow chart 300 corresponding to the message diagram 200, including steps:
302 "User Login via IDP";
304 "Send IDP Assertion Response";
306 "Send Assertion to Reverse Proxy";
308 "Send Revised Assertion to Service Provider"; and
310" Return Requested Resource".

The steps 302 to 308 correspond directly with respective messages 202 to 208 of Fig. 2. After a successful progress through the steps 302 to 308, the requested resource in the SP 104 is returned in the step 310 to the client 110 which is now logged in (state 312) with the SP 104. At the Step 302 "User Login via IDP", the client 110 requests authentication to the resources of the SP 104 with the "User login" message 202 sent to the IDP 106.

This step may occur as a result of redirection from the SP 104 (in "Service Provider Initiated" login), directly via navigation from the user's browser as shown here, or via Application Programming Interface (API) calls from a user application programs.

The step 302 may also be performed through a separate entry form requesting login credentials, a two-factor authentication mechanism, or a previous IDP authentication session wherein the IDP 106 is part of a larger trust chain and where the client already has an assertion provided to it from another IDP. Another example of requesting login to the service provider via the IDP might be coupled with the username/password request when logging into the workstation, or any authentication mechanism that the client wishes to use in order to formally establish the identity of the requesting client.

At the Step 304 "Send IDP Assertion Response", the IDP 106, upon successful authentication of the user, generates an assertion in the form of a XML payload back to the requesting client's browser. This typically includes a redirection to the actual Service Provider's URL (the SP 104) that is to receive the Assertion.

The Assertion itself contains two components:
1) The actual assertion, in the form of a XML document, and
2) An assertion signature, that is essentially an encrypted version of the XML document.

Since the signature is an encryption, the Service Provider 104 must have been provided with a key during the initial configuration of the Single Sign On implementation.

In the case of the single-sign-on system 100 however, the PRS Reverse Proxy 112 appears to be the Service Provider to the IDP 106 and the client browser 118. The key shared between the actual IDP 106, and the PRS Reverse Proxy 112 for this purpose must be the encryption key "A". This key which is typically embedded within a certificate, is used to decrypt the signature component of the assertion, and validate it's authenticity against the XML component.

As indicated above, the initial configuration of the Single Sign On implementation must include the establishment of a key that is shared between the IDP 106 and the PRS-RP 112 (the encryption key "A"), and another, different shared key between the IDP 106 and the SP 104 (the encryption key "B").

The steps 302 and 304 constitute a complete IDP authentication session for the client 110.

Once the client has authenticated against the IDP 106, and gets provided with the assertion. The client can then use this assertion repeatedly, even with different service providers, provided those service providers have already been configured to accept assertions from the same IDP 106, by virtue of sharing of the encryption key "A".

At the Step 306 "Send Assertion to Reverse Proxy", the original resource configuration of the IDP 106 identifies the PRS Reverse Proxy 112 as the Service Provider. In this way, the user's browser posts the assertion and all subsequent resource requests to the PRS Reverse Proxy 112.

Within the assertion itself, the IDP 106 has provided a "Return URL". When working with some specific Cloud SaaS solutions such as salesforce.com for example, this Return URL must reflect a valid salesforce.com domain address, otherwise, the assertion will be rejected. However, since the user's browser in the client 110 is in fact communicating with the SaaS application of the SP 104 via the PRS Reverse Proxy 112, the Return URL will not reflect the SaaS domain - it will reflect the domain of the PRS Reverse Proxy 112.

At the Step 308 "Send Revised Assertion to Service Provider", the PRS Reverse Proxy 112 changes the Return URL to an actual SaaS application URL of the Service Provider. While this is normal activity for a conventional Reverse Proxy Server (exchanging URL's between a requester and a provider), the Assertion's signature must also change.

By having the ability to change the Assertion's signature, the PRS Reverse Proxy 112 differs from a conventional Reverse Proxy Server. The PRS-RP 112 and now acts as the Service Provider from the point of view of the actual IDP 106 and client browser 118, consuming the original Assertion by decrypting the signature, and modifying the assertion to reflect any required URL changes required to perform standard Reverse Proxy operations. This means changing all URL references referring to the PRS-RP 112, to URL references referring to the actual SaaS Service Provider, i.e. the SP 104. These changes to the XML document are then encrypted using the different encryption key "B" that is shared between the PRS Reverse Proxy 112 and the SP 104 into a revised signature with which to sign the Assertion.

Figure 3B illustrates an assertion conversion process 350, including an Assertion 352, comprising a clear text section 354 and a signature section 356, and a Revised Assertion 358, comprising a revised clear text section 360 and a revised signature section 362. The clear text section 354 includes: a Source URL (Client) 364; a Destination URL (Proxy) 366; and an Other Data section 368. The revised clear text section 360 includes: a Source URL (Proxy) 370; a Destination URL (Service Provider) 372; and the (same) Other Data section 368.

The SAML AuthRequest is a XML document in clear text, the term "clear text" referring to human readable ASCII text for example. The assertion sent by the client device 110 includes the XML document (the clear text section 354) and a signature (the signature section 356) which is in effect an encrypted version of the XML document, i.e. an encrypted version of the clear text, the encryption having been originally made with a first encryption key "A", which is a random string of bits having certain properties. Encryption, and encryption with keys, is a well known technique of the field of cryptography.

The XML document of the Assertion includes a first URL, which is the URL of the requester, i.e. the client device 110, shown as the Source URL (Client) 364, and a second URL shown as the Destination URL (Proxy) 366, which is the URL of the destination of the client's assertion request, i.e. the PRS-RP 112, to which the assertion is sent.

After validation, the assertion is changed in the step 308 "Send Revised Assertion to Service Provider" into a revised assertion. Validation is done in the PRS-RP 112 by re-encrypting the clear text section 354 using the first encryption key "A", to generate a test signature 374, and comparing the test signature 374 with the original signature 356.

The revised assertion 358 includes the revised clear text section 360, which comprises the Source URL (Proxy) 370 identifying the PRS-RP 112, that is copied from the Destination URL (Proxy) 366 of the clear text section 352, and a third URL shown as the Destination URL (Service Provider) 372, which is the URL of the destination of the revised assertion, i.e. the SP 104, to which the assertion is sent. The Other Data section in the revised clear text section 358 is unchanged from the corresponding Other Data section in the original clear text section 352.

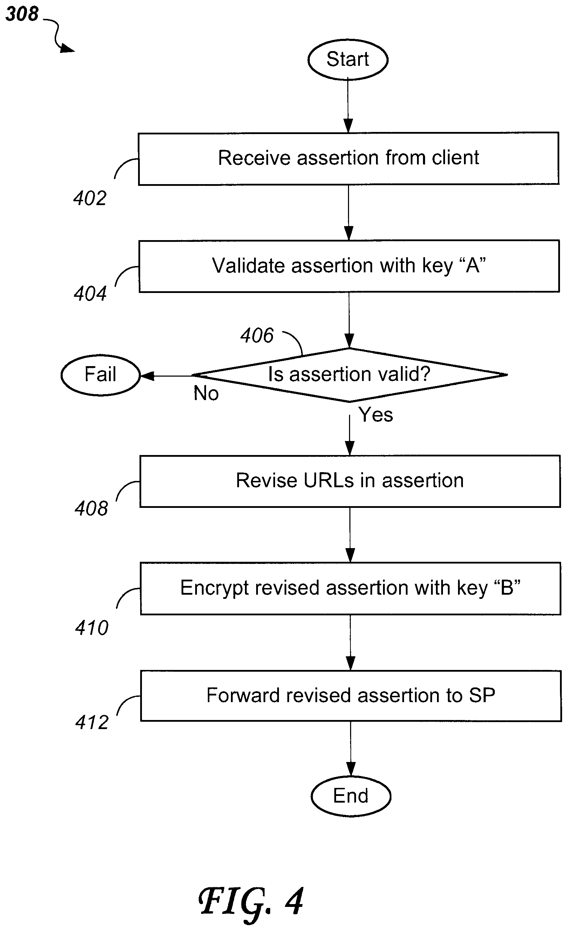

In the revised assertion 358, the source URL, i.e., the Source URL (Proxy) 370, makes the PRS-RP 112 appear as the requester of the revised assertion 358. The revised signature 362 of the revised assertion 358 is computed in the PRS-RP 112 using a second encryption key "B". Figure 4 is a flow chart illustrating individual steps of the step 308 "Send Revised Assertion to Service Provider" which is performed in an Assertion Processing Module (see Assertion Processing Module 1214, Fig. 12) of the PRS Reverse Proxy 112, including steps:
402 "Receive assertion from client";
404 "Validate assertion with key A";
406 "Is assertion valid?";
408 "Revise URLs of assertion";
410 "Encrypt revised assertion with key B"; and
412 "Forward revised assertion to SP".

At the Step 402 "Receive assertion from client", an "original assertion" is received from the client 110. It is of no consequence when or how the original assertion had been obtained by the client 110, but it is assumed that it was provided by the IDP 106 as a result of the initial user login.

At the Step 404 "Validate assertion with key A", the signature part of the original assertion is validated using the encryption key "A" that is shared between the IDP 106, and the PRS_RP 112.

Validation of the XML Signature is based comparing it with a test signature generated using key "A". If the XML Signature matches the test signature, the contents of the assertion have been validated. For more details on XML signature syntax and processing, please refer to the document at <http://www.w3.org/TR/xmldsig-core/>.

At the Step 406 "Is assertion valid?", the decrypted original signature is validated against the "actual" assertion, i.e. the unencrypted XML document of the original assertion is compared with the decrypted original signature, and the decrypted original signature is discarded.

If they match (exit "Yes" from step 406), execution continues with the following step 408, otherwise (exit "No"), the original assertion is discarded, the operation fails, and a validation failure may be recorded.

At the Step 408 "Revise return URL of assertion" all URL values in the original assertion, that is all URL values in the XML document, that refer to the PRS-RP 112 are replaced with the URL of the SP 104. This action creates a revised XML document for the "revised assertion" which differs from the original assertion. The revised XML document may also be referred to as a "revised clear text".

At the Step 410 "Sign revised assertion with key B", the revised XML document is signed with a new signature based on the encryption key "B", thus forming the encrypted revised assertion which includes the revised XML document (a revised "actual" assertion) and the new signature.

At the Step 412 "Forward revised assertion to SP", the revised assertion is sent to the service provider 104. At this point, the identity of the original client 110 is no longer visible in the assertion, and the PRS Reverse Proxy 112 has taken the client's place as far as the SP 104 is concerned.

The reader's attention is now directed back to Fig. 3.
At the Step 310 "Return Requested Resource", the SaaS Service Provider SP 104 validates the revised assertion, and sends back a response, containing a Return URL for the SaaS Service Provider. The response (corresponding to the Assertion result 210 of Fig. 2) is intercepted by the PRS Reverse Proxy 112, and modified by changing the response URL to reflect a URL appropriate for operation of the PRS Reverse Proxy in front of the SaaS Service Provider. This revised response (the Revised assertion result 212 of Fig. 2) is then sent back to the client browser 118 in response to the original request.

The result from the service provider is a "Redirect URL" message (HTTP 302) to the home page of the SP 104. No more key replacement or validation is required. The Reverse Proxy is now doing it's normal job of changing normal URLs to Reverse Proxy URLs as would be the normal functioning of any Reverse Proxy.

After login, the client 110 is able to use the services of the service provider 104 by having all traffic forwarded through the PRS Reverse Proxy 112. Any encrypted traffic over Secure Socket Layer (SSL) tunnels through the PRS Reverse Proxy 112 will then be intercepted in the PRS Reverse Proxy 112, and all URL references to itself will be replaced with URLs of the domains of the client 110 or the service provider 104 respectively, depending on the direction of the traffic. This functionality is no different from that of a conventional Reverse Proxy. What is different and novel in the present invention, are the steps described above which enable SAML 2.0 authentication for single sign-on through the PRS Reverse Proxy.

### Multiple Clients

Although shown with only a single client 110 in Fig. 1, it is understood that the single-sign-on system 100 is capable of providing SSO capability for any number of clients 110 through a single PRS-RP 112.

In a number of situations however, a Service Provider such as a cloud application like salesforce.com for example, may be required to be shared within an organization, potentially across a plurality of jurisdictions. Typically, each of the users, that is each client 110, of the Service Provider is then required to maintain their own Single Sign-On implementation, potentially to be authenticated with a separate Federated SAML2 Identity Provider.

The single-sign-on system 100 of Fig. 1 only uses a single pair of encryption keys for signing the SAML assertions, the encryption key "A" between the client 110 and the PRS-RP 112, and the encryption key "B" between the PRS-RP 112 and the SP 104. The encryption key "B" enables the PRS-RP 112 to represent the one or several clients 110 to the SP 104. This key which is provided by an Identity Provider (not shown, and not necessarily the IDP 106 of Fig. 1) is shared between the PRS Reverse Proxy 112 and the Service Provider 104. However, with multiple clients across a plurality of jurisdictions wishing to share the Service Provider resources, it is either impractical or impossible trying to also share the encryption keys "A" across the plurality of IDPs.

The solution is to pair a dedicated PRS Reverse Proxy with each separate IDP, such that the individual IDPs can establish a unique encryption key shared exclusively by the IDP and its corresponding PRS Reverse Proxy and the clients using the PRS Reverse Proxy, while all the Reverse Proxy Servers share encryption keys with one another and the actual Service Provider. This technique essentially establishes a many-to-one relationship of encryption keys from IDPs to a single encryption key used by the Service Provider.

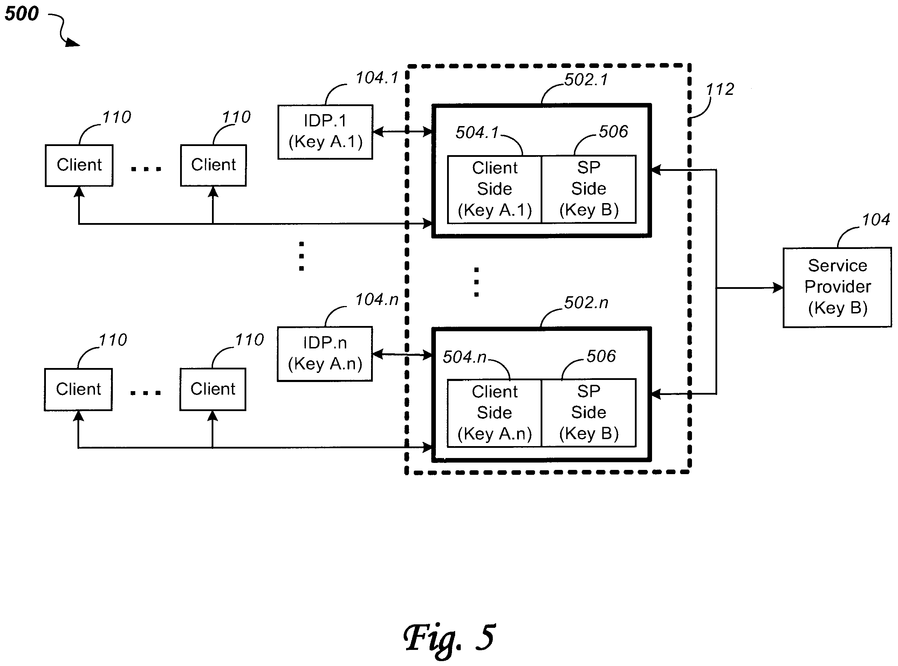

Figure 5 illustrates a multi-IDP system 500 for implementing federated Single Sign-ON (SSO) for multiple sets of clients according to another embodiment of the invention.

The multi-IDP system 500 shows the single Service Provider 104 connected to a plurality of n dedicated PRS-RP servers 502.i, i = 1 to n. Each of the dedicated PRS-RP servers 502.i is connected to a number of clients 110 and is configured to process assertions from clients using a corresponding one of a plurality of n Identity Providers (IDP.1 to IDP.n), reference numeral 106.i.

Each of the dedicated PRS-RP servers 502.i includes two encryption key repositories, a client side repository 504.i and a service provider (SP) side repository 506. The encryption key repositories 504.i and 506 may be stored in persistent storage (see Key Store 1222 of Fig. 12 below). The client side repository 504.i in each respective dedicated PRS-RP servers 502.i is adapted to hold a set of encryption keys "A.i", corresponding to the encryption key "A" of the single-sign-on system 100, where the individual encryption keys "A" in the set "A.i" correspond to the individual authenticated clients 100 using the corresponding dedicated PRS-RP servers 502.i to which they are connected.

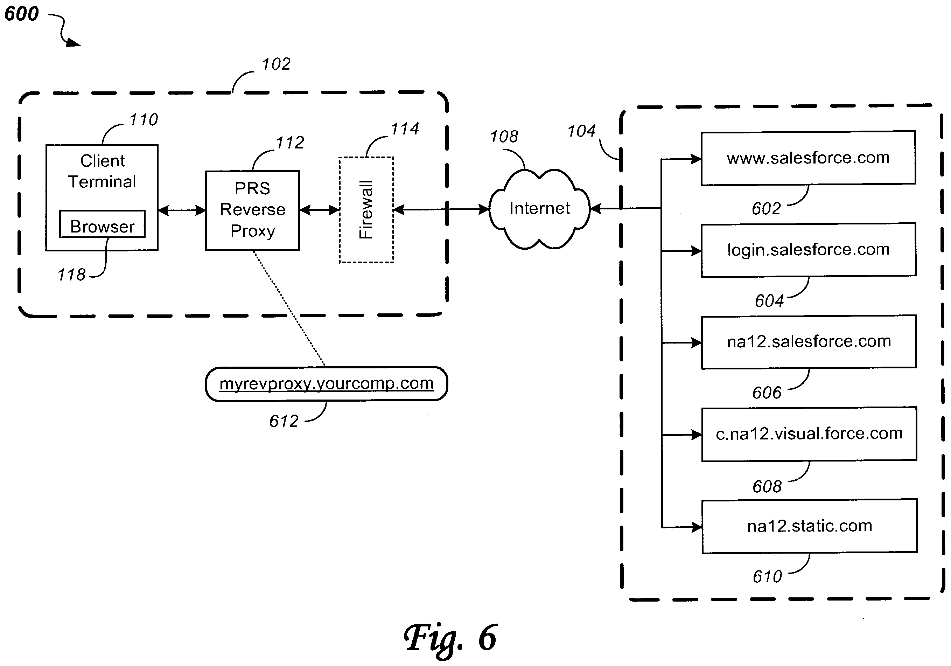

The multi-IDP system 500 of Fig. 6 is a generalization of the single-sign-on system 100 of Fig. 1. Fig. 6 indicates distinct groupings 508.i, i = 1 to n, indicative of jurisdictions or organizational divisions which give rise to the requirement of using a different identity provider for each group.

Not shown, but implied in Fig. 6 are optional firewalls, and private networks and the internet, to provide connectivity analogous to such elements in Fig.1.

Without loss of generality, each client 110 in each groupings 508.i is shown connected only to a specific one of the dedicated PRS-RP servers 502.i and the corresponding IDP.i, but in practice any client 110 may also be able to access any other of the dedicated PRS-RP servers 502.i as long as they can also access the corresponding IDP.i.

In order to permit any of the clients 110 to access the SP 104 through any of the dedicated PRS-RP servers 502.i, it is then necessary that every dedicated PRS-RP server 502.i is configured with all n Identity Providers IDP.i.

The service provider side repository 506 holds a single key, the encryption key "B", which is shared with the Service Provider 104, and which was established when the multi-IDP system 500 was configured.

Fig. 5 shows individual dedicated PRS-RP servers 502.i which may be implemented in physically distinct computer servers. Conversely, all or any number of the individual dedicated PRS-RP servers 502.i may be grouped and implemented in the single PRS-RP server 112 as indicated by the dotted line. Only a single provider side repository 506 holding the encryption key "B" may be required in any combined or single PRS-RP server 112.

### Glossary

Operations of the PRS-RP server 112 include processing of requests from the browser 118 to servers in the SP 104, and processing of responses from the SP 104 servers to the browser 118. Definitions of terms are provided in the following glossary for clarity.

Hypertext Transfer Protocol (HTTP) - is an application protocol for distributed, collaborative, hypermedia systems. HTTP is the foundation of data communication for the World Wide Web. See RFC 2616 for protocol details (https://tools.ietf.org/html/rfc2616).

Domain name - (source: Wikipedia: en.wikipedia.org/wiki/Domain_name) A domain name is an identification string that defines a realm of administrative autonomy, authority, or control on the Internet. Domain names are formed by the rules and procedures of the Domain Name System (DNS). Domain names are used in various networking contexts and application-specific naming and addressing purposes. In general, a domain name represents an Internet Protocol (IP) resource, such as a personal computer used to access the Internet, a server computer hosting a web site, or the web site itself or any other service communicated via the Internet.

Short form domain - In the context of the PRS Reverse Proxy, this is a shorter version of the domain which is effectively an alias to the domain name, e.g. "sfdc" may be used as the short form domain for "salesforce.com".

Primary domain - This is the primary server domain of the application. In the case of complex cloud applications, there may be many different hosts.

Fully Qualified Domain Name (FQDN) - (source: Wikipedia: en.wikipedia.org/wiki/Fully_qualified_domain_name) sometimes also referred as an absolute domain name, is a domain name that specifies its exact location in the tree hierarchy of the Domain Name System (DNS). It specifies all domain levels, including the top-level domain and the root zone. A fully qualified domain name is distinguished by its unambiguity; it can only be interpreted one way. For example, given a device with a local hostname myhost and a parent domain name example.com, the fully qualified domain name is myhost.example.com. The FQDN therefore uniquely identifies the device - while there may be many hosts in the world called myhost, there can only be one myhost.example.com.

URL (Uniform Resource Locator) - (adapted from source: Wikipedia: en.wikipedia.org/wiki/Uniform_resource_locator) - In computing, a uniform resource locator or universal resource locator (URL) is a specific character string that constitutes a reference to an Internet resource. A URL is technically a type of uniform resource identifier (URI) but in many technical documents and verbal discussions URL is often used as a synonym for URI. Every URL consists of some of the following: the scheme name (commonly called protocol), followed by a colon, two slashes, then, depending on scheme, a server name (exp. ftp, www, smtp, etc) followed by a dot (.), then a domain name (alternatively, an IP address), a port number (optional), the path of the resource to be fetched or the program to be run, then, for programs such as Common Gateway Interface (CGI) scripts, a query string, and an optional fragment identifier. The syntax for a URL is scheme://domain:port/path?query_string#fragment_id.

Absolute URL - A URL (see above) that is the full format of the URL which includes the scheme and domain portions, e.g. https://www.server.com/scripts/dostuff.js is an absolute URL.

Relative URL - A URL (see above) that points to a resource relative to the current location. This format does not have a scheme or domain part, e.g. /scripts/dostuff.js is a relative URL.

### Multi-Homed Reverse Proxy

Regardless of the method of logging in, SSO with SAML 2.0 as described above, or another sign-on process for giving the client access to resources of the service provider, the Reverse Proxy Server must subsequently deal with additional challenges as described in the following.

Conventional Reverse Proxy Servers are typically designed and implemented to provide front-door load balancing for incoming traffic to be distributed across a plurality of homogeneous web servers that are servicing the same requests.

A new challenge is to use a Reverse Proxy server to act as a gateway to a heterogeneous mix of web servers, each with a unique URL / Domain, and a set of disparate services. As cloud adoption by the enterprise continues to grow, so does the need to monitor, moderate, and manage access to these web-based applications and resources, across all protocols. It is impractical to setup a Reverse Proxy on a cloud by cloud basis.

The problem is further complicated if the connections are utilizing Secure Sockets Layer (SSL) or Transport Layer Security (TLS) connections, for example with HTTP Secure (HTTPS) which is based on encryption using certificates. This is because the Reverse Proxy would then have to serve a single certificate to the client browser on behalf of all back-end cloud services.

Reverse Proxy solutions that exist today would implement only a simple set of URL rewriting rules that transform one domain address (for example www.cloudapp.com) to a local address (for example cloudapp.mycorp.com) and back again. The request URLs are transformed from the local URL (i.e. cloudapp.mycorp.com in the present example) to the real public URL (i.e. www.cloudapp.com in the present example). The response content is then altered to modify any references to the real URL, to the local URL in well known HTML tags that contain URL references such as anchor tags, image tags, and script src references.

These reverse proxies however cannot cope with multiple hosts of a service provider in a single domain. The typical format of domain mapping, i.e. of mapping remotedomain.localdomain.com to www.remotedomain.com will not work for this purpose. Existing reverse proxies may only be capable of being configured to access the World Wide Web (www) hosts of multiple domains corresponding to different service providers.

A problem that occurs with cloud applications of a service provider such as for example salesforce.com and others, is that content from one page may be loaded from multiple hosts in the same domain, where the hosts are not www hosts. The cloud application may also be contained on multiple hosts on multiple domains that make up the actual content. In this situation, the Reverse Proxy function is even more complicated as it needs to keep track of which host and which domain is being requested. Ambiguous references may be difficult to resolve as they can refer to ANY host on ANY domain.

The PRS Reverse Proxy 112 is provided with a Reverse Proxy strategy that allows it to address this emerging requirement, with an ability for this single Reverse Proxy server to provide access across a heterogeneous mix of cloud solutions.

This strategy exploits features of the HTML protocol and the the JavaScript scripting language. HTML provides for URL references being embedded in a HTML document, as well as code written in the JavaScript scripting language. HTML documents, which may include JavaScript code, are requested by the client, and subsequently downloaded from the server to the client. JavaScript code may then be executed on the client when it is called from within a HTML document, with the result that URL references may be dynamically generated. HTML and JavaScript are commonly used elements of client-server systems running on the internet. Details of this and related web technologies may be found in numerous standards, text books, and articles, for example http://www.w3schools.com/js/, http://en.wikipedia.org/wiki/JavaScript, and http://msdn.microsoft.com/en-us/magazine/cc163419.aspx.

The Reverse Proxy strategy of the PRS Reverse Proxy 112 involves a number of components, including:
- persistence of state information and history of the sessions established by the browser to specific cloud services;
- a heuristics engine for determining the correct services to redirect requests to if the PATH'S are simply indirect references such as "/index.html" rather than fully qualified path names such as www.cloudapp.com/index.html;
- a URL re-writing grammar that allows the client browser to follow all embedded links and URL references across the plurality of back-end servers.

Figure 6 illustrates an exemplary multi-host Reverse Proxy system 600 to yet another embodiment of the invention, including the enterprise installation 102 of Fig. 1 which comprises the client 110, the PRS-Reverse Proxy 112, and the optional firewall 114 and the service provider (SP) 104, which comprises individual hosts 602, 604, 606, 608, and 610. In this example. the individual hosts are also referred to by their domain names of a specific service provider, i.e. salesforce.com. The individual hosts are:
- www.salesforce.com, the individual host 602, which is the root host of salesforce.com;
- login.salesforce.com, the individual host 604, which may be a login server of salesforce.com;
- na12.salesforce.com, the individual host 606, which may provide some applications of salesforce.com;
- c.na12.salesforce.com, the individual host 608, which may provide common components of applications of salesforce.com; and
- na12.static.com, the individual host 610, which may provide support for the applications of the individual host 606 (na12.salesforce.com) and the individual host 608 (c.na12.salesforce.com), but belongs to a different domain (static.com), not salesforce.com.

It is understood that the domain names of these five individual hosts are examples which are shown for illustrative purposes, and the invention is not limited to any particular number of individual hosts, or hosts having any specific domain names. It is further noted that the division of facilities and resources in a service provider, such as salesforce.com, is under control of the service provider and outside the scope of the present invention. It is however an objective of the present invention to provide Reverse Proxy capabilities in the PRS-RP 112 to match the domain and host layout of the service provider.

The client 110, by way of his browser 118, is enabled through the PRS-RP 112 to log into the SP 104, for example using the SSO method of signing in as described above or by another method.

Accessing the individual hosts of the SP 104 through the PRS-RP 112 may be facilitated by a URL format convention described in the following.

The PRS Reverse Proxy 112 is designed for multiple domains and multiple hosts. The PRS-RP 112 itself has a single host name in the enterprise 102, for example "myrevproxy.yourcorp.com", shown in Fig. 6 with reference numeral 612.

The link to a resource in the SP 104 from the client 110 would then be the hostname of the PRS-RP 112 followed by:
a domain short form, for example "sfdc" representing "salesforce.com", i.e. the service provider 104;
a host name, for example "na12" representing the individual host 606 in the SP 104;
and the rest of the normal URL path.
An example according to this convention would thus be:
"https://myrevproxy.yourcorp.com/sfdc/na12/001/o", where:
- myrevproxy.yourcorp.com is the single host name (612) identifying the PRS-RP 112;
- the first element in the path identifies the domain within the SP 104 in short form, i.e. sfdc;
- the second element in the path identifies the individual host by its actual name, i.e. "na12";
- the rest of the path is the same as it would be going directly to the host, e.g. "/001/o", the same expression as in https://na12.salesforce.com/001/o which would be used if one were to access the host directly without Reverse Proxy.

A benefit of using the single enterprise host name is that only one SSL certificate is required for the Reverse Proxy to support a plurality of domains and hosts. A potential drawback of this scheme could be that any customizations to the cloud applications that examine the URLs will potentially be affected as they will need to change the URL format they are using to call other elements. But the PRS Reverse Proxy provides heuristics to recover from these types of requests, as described in the following.

More and more cloud applications are using dynamic JavaScript to generate their content. This poses big problems when it comes to dealing with applications with multiple hosts and domains as resolving the host and domain properly can be troublesome.

When content is retrieved by the PRS-RP 112 from the server (a host of the SP 104), URLs must be changed before forwarding the content to the client 110. But there is generally not only a simple URL to change from the original URL (www.salesforce.com in this example) to the local Reverse Proxy reference, i.e. myrevproxy.yourcorp.com/sfdc/www as in the example of Fig. 6.

A method by which the PRS Reverse Proxy deals with dynamic Javascript URLs is to intercept the actual Javascript calls in an application context, which is described in detail in the section "Process for Preserving JavaScript URLs" below.

The situation may be especially difficult when the URL is a relative link. When the PRS Reverse Proxy 112 receives a relative request it does know for which domain or host the request is for. In that case there is a heuristic algorithm (see the section Process for Resolving the Domain below) for determining the correct server to which the request should be mapped.

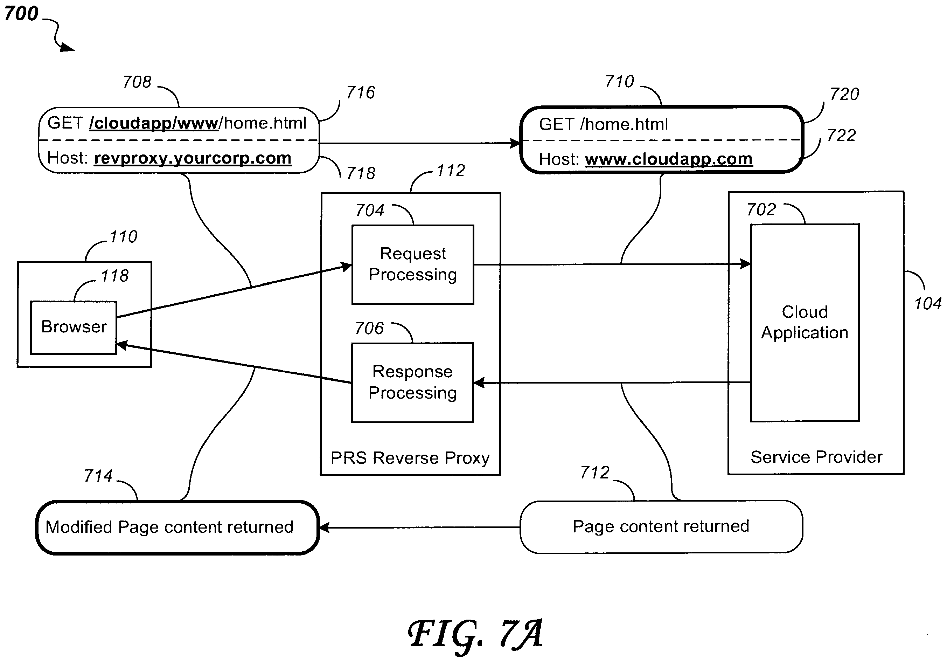

Figure 7A shows a data flow diagram 700 as an example of URL manipulations in the PRS Reverse Proxy 112, including the Browser 118 of the Client 110 connected to a Cloud Application 702 of the Service Provider 104 through the PRS Reverse Proxy 112 which includes a Request Processing Function 704 and a Response Processing Function 706.

In the example shown, the Client 110 obtains a desired HTML page from the Cloud Application 702 through a sequence of four messages as illustrated in Fig. 7A as:
a HTTP Request 708 from the Client 110 to the PRS-RP 112;
a modified HTTP Request 710 from the PRS-RP 112 to the Cloud Application 702;
a HTML page 712 returned from the Cloud Application 702 to the PRS-RP 112; and
a modified HTML page 714 from the PRS-RP 112 to the Client 110.

The normal flow of the reverse proxy processing, shown in Fig. 7A, with a reverse proxy URL reference in the form of the HTTP Request 708 (for example, https://revproxy.yourcorp.com/cloudapp/www/home.html), originating from the user's browser 118. The HTTP Request 708 includes a Request URL 716 (i.e. /cloudapp/www/home.html), which is a relative URL, and a Host header 718 (i.e. revproxy.yourcorp.com).

The Request Processing Function 704 of the PRS-RP 112 modifies the Request URL 716 and the Host header 718 of the HTTP request 708, into a modified Request URL 720 (i.e. /home.html) and a modified Host header 722 (i.e. www.cloudapp.com) respectively of the modified HTTP Request 710. The modified HTTP Request 710 (i.e. https://www.cloudapp.com/home.html) may also be considered as an absolute URL which includes the scheme and domain portions to point to the real URL of the cloud application 702.

As illustrated, the HTTP Request 708 specifies the desired HTML page, but the HTTP Request 708 is addressed to the URL of the PRS-RP 112 Host "revproxy.yourcorp.com", wherein "cloudapp" is the short name of the domain of the Cloud Application 702, "www" is the short name of its host URL of the SP 104.

In the Request Processing Function 704, the HTTP Request 708 is modified into the modified HTTP Request 710 which is addressed to the URL of the host of the Cloud Application 702 "www.cloudapp.com". Elements of the HTTP Request 708 that are modified to obtain the modified HTTP Request 710, are shown in a bold underlined type style in Fig. 7A.

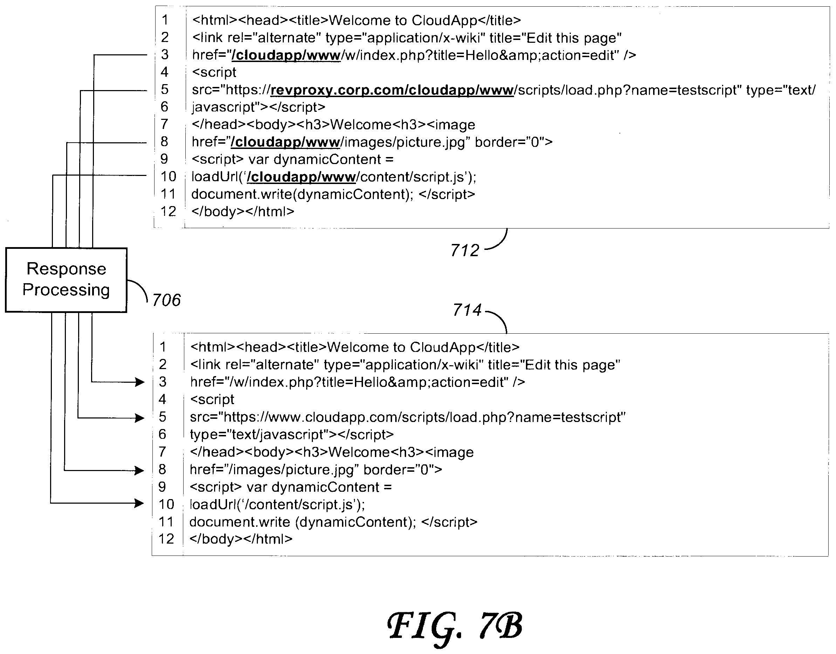

The HTML page 712 that is returned from the Cloud Application 702 in response to the modified HTTP Request 710, is then modified in the Response Processing Function 706 of the PRS-RP 112, and the modified HTML page 714 returned to the Browser 118 of the Client 110. An example of the HTML page 712 and the corresponding modified HTML page 714 are shown in Fig. 7B.

The cloud application 702 then returns the requested page content 712. The Response Processing function 706 of the PRS-RP 112 then modifies the returned page content 712 into a modified page content 714 by changing all relative and absolute URL references in HTML tags (e.g. src and href portions of tags, such as "<a href="/link/here">A Link</a>") into modified HTML tags (e.g. <a href="/cloudapp/www/link/here">A Link</a>"). All known JavaScript function calls specific to the cloud application, for instance "loadUrl('/content/script.js')" are changed into JavaScript function calls (i.e. "loadUrl('/cloudapp/www/content/script.js)"). The modified page content 714 is loaded by the user's browser, which will then load all references on the modified page and make further requests through the reverse proxy, and so on.

Figure 7B shows code examples of the HTML page 712, and the modified HTML page 714, indicating the modifications performed in the Response Processing Function 706. Corresponding code lines containing absolute and relative URLs in the page content to be modified are indicated by arrows passing through the Response Processing Function 706.

Specifically:
- line 3, which is a href statement: the term /cloudapp/www is removed from the absolute URL;
- line 5, which is a src statement: the term revproxy.yourcorp.com/cloudapp/www/ in the URL, which is the server name of the PRS-RP 112 followed by the short names of the domain of the Cloud Application 702 (cloudapp) and of its host URL (www), is replaced with www.cloudapp.com, which is the URL of the host of the cloud application; and
- both lines 8 and 10, which contain relative URLs: the term /cloudapp/www is removed.

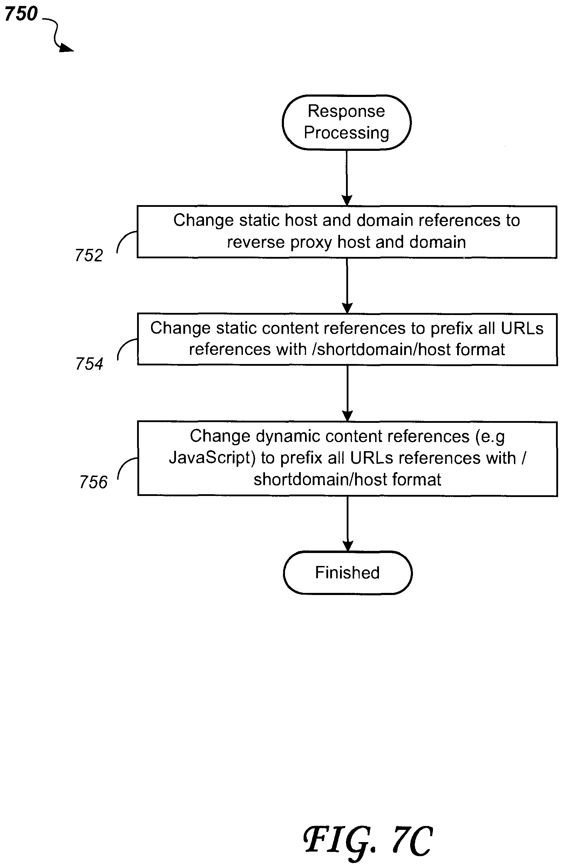

Figure 7C shows a flowchart 750 of the Response Processing Function 706, with 3 main steps:
752: Change static host and domain references to reverse proxy host and domain;
754: Change static content references to prefix all URLs references with /shortdomain/host format; and
756: Change dynamic content references (e.g JavaScript) to prefix all URLs references with /shortdomain/host format.

The processing operations described in Fig. 7A above are straight forward for the reverse proxy. The case of JavaScript dynamic generation of URLs however is problematic with cloud applications and needs to be handled as a special exception case. The response processing (modifying the content of the HTML page 712 into the modified HTML page 714) assumes that the PRS-RP 112 is able to properly identify all relevant URLs that need to be changed.

In the case of dynamic URLs that are generated at run time in JavaScript, the reverse proxy typically may not know that a url is being generated. This may result in a relative request that is coming from the user's browser that does not have the expected reverse proxy format of https://reverseproxydomain.com/appshortform/host/path. In this exception case, the heuristic algorithm of the "Process for Preserving JavaScript URLs" described below, is used to determine which domain and therefore which short form is to be used, and which host should used in the path of the URL to properly be processed.

### Process for Resolving the Domain

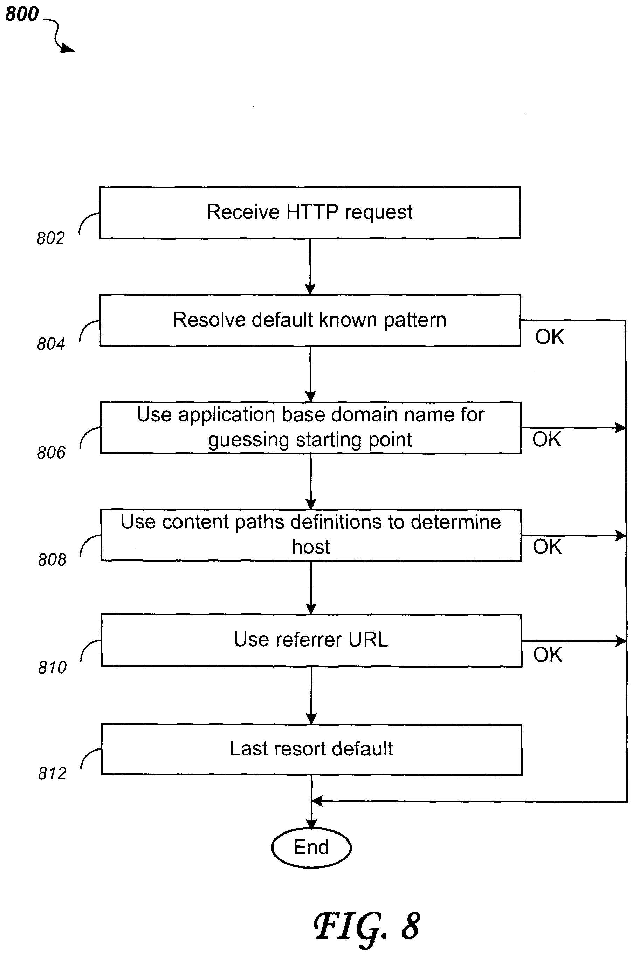

Figure 8 shows a domain resolution method 800 according to another embodiment of the invention, performed in the PRS-RP 112 for resolving a current URL of an HTTP request, comprising steps:
802 "Receive HTTP request";
804 "Resolve default known pattern";
806 "Use application base domain name for guessing starting point";
808 "Use content paths definitions to determine host";
810 "Use referrer URL"; and
812 "Last resort default".

At the step 802 "Receive HTTP request", a HTTP request from the client 110 is received by the PRS-RP 112. The request is assumed to have a HTTP header pattern of the following form: "https://<PRS Reverse Proxy Host FQDN>/<DOMAINSHORTFORM>/<HOSTSHORTFORM>/". This HTTP header pattern has three components:
<PRS Reverse Proxy Host FQDN> is the URL of the PRS Reverse Proxy 112, also referred to as the domain name of the PRS Reverse Proxy computer 112;
<DOMAINSHORTFORM> is the short form of the URL of the root host in the service provider SP 104, also referred to as the short form of the primary domain name of the service provider;
<HOSTSHORTFORM> is the short form of the URL of the intended, and thus the selected, host in the service provider SP 104, also referred to as the short form host name.

The terms "host" and "host computer" are interchangeable, both referring to a server computer, that is a component of the service provider 104.

In addition the HTTP request header may also contain a path name specifying the requested resource or file on the host. The sequence /DOMAINSHORTFORM/HOSTSHORTFORM/path/ may be considered to be an expanded path. The DOMAINSHORTFORM and the HOSTSHORTFORM are converted into a host.domain address by looking up the translation from short form names to real names in a configuration file which contains a domain and host configuration table. Elements of the path or the expanded path are separated by forward slash characters "/".

The Step 804 " Resolve default known pattern" is based on an assumption that the components of the HTTP header pattern are correct.

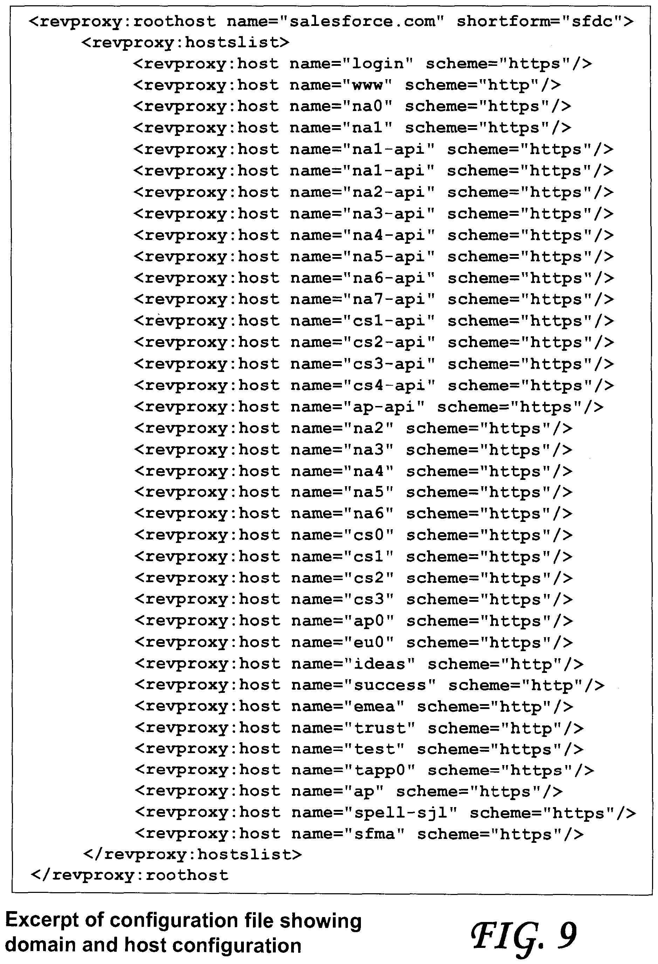

Figure 9 shows a sample domain and host configuration table. A segment of a PRS Reverse Proxy configuration file for the salesforce.com domain is illustrated, which indicates that the short form of the URL of salesforce.com is "sfdc", and includes a "hostslist" which lists short forms (names) of hosts in salesforce.com. For each of the hosts, a "scheme" is provided which indicates the protocol to be used for transmitting the request to the respective host. While only one example PRS Reverse Proxy configuration file is shown, it is understood that the PRS-RP 112 may comprise a plurality of PRS Reverse Proxy configuration files for a corresponding plurality of service provider domains.

In the step 804, the HTTP header pattern is matched against the configured patterns. If the HTTP header pattern matches any of the configured patterns, i.e. if both the domain short form (e.g. sfdc) and the host short form (e.g.. www) are found in the PRS Reverse Proxy configuration file, the HTTP header pattern is considered valid (exit "OK" from step 804), and the domain resolution process is finished, otherwise the step 806 is executed next.

The step 806 "Use application base domain name for guessing starting point" is executed when the HTTP header pattern is not matched precisely in any PRS Reverse Proxy configuration file.

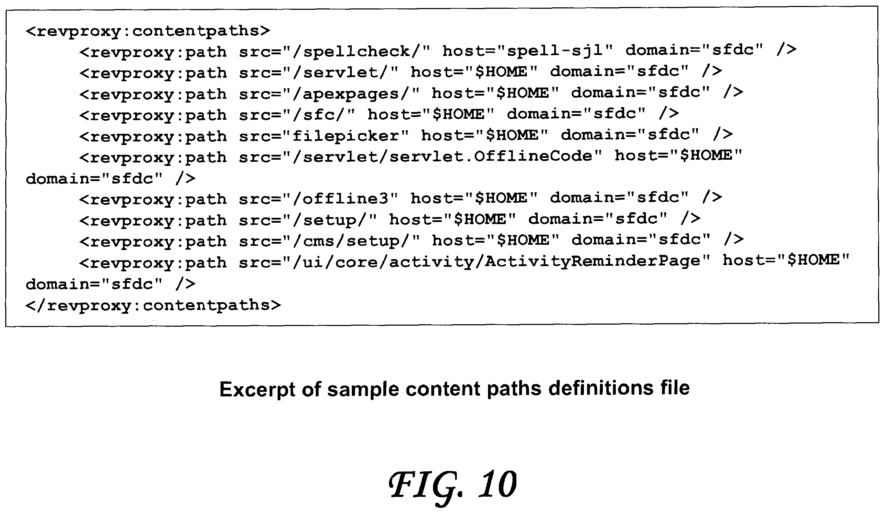

First it is assumed that the domain matches the primary domain of the cloud application as a starting point, i.e. sfdc in the present example. If the domain (sfdc) is known but the host is not known, then a home server for the cloud application instance contained in the received HTTP request may be have been configured in a content paths definitions file (see example in Fig. 10) of the PRS Reverse Proxy 112 configuration files 1228 (Fig. 12). The home server, identified as "$HOME" in the a content paths definitions file, is the default host name for a specified instance of a specific cloud application. In the case of salesforce.com for example, the home server is based on the organization identity (ID) of the enterprise installation 102 to which the PRS-RP 112 belongs.

If host and domain are thus resolved in the step 806 (exit "OK" from step 806), the domain resolution process is finished, otherwise the step 808 is executed next.

At the step 808 "Use content path configuration to determine host", content path overrides are applied if they have been defined in a content path configuration file to be used as hints for the correct server host. The pattern matching of the relative URL is then used to set the domain and host to know values. The $HOME variable in the sample content path configuration file is replaced with the home host defined in the configuration file or may be determined dynamically if it is not defined in the configuration file.

The "home server" for the application (e.g.. na12.salesforce.com, when user is logged in) is configured by the application organization identifier (essentially by the application instance). When the user logs into salesforce.com for example through login.salesforce.com, they will be redirected to their "home" server . The PRS-RP 112 has a list of possible home servers and remembers which home server the user has logged into, dynamically setting it if not defined. Similarly for other cloud applications, the login redirects to the primary server used by the application.

Figure 10 shows an excerpt of a sample content paths definitions file.

For example, the body of the HTTP request may contain a reference to a spell checking application, expressed as a relative path "src = /spellcheck/". In the step 810, the host = "spell-sjl" and the domain = "sfdc" are found along with the application "spellcheck" in the second line of the sample content paths definitions file of Fig. 10.

If the spellcheck application had been directly requested in the HTTP header (instead of only referenced in the body of the HTTP request), the same host name = "spell-sjl" and the domain corresponding to the domain short form "sfdc" would already have been found in the step 804 above by searching the hosts list of the domain and host configuration (Fig. 9) under the salesforce.com domain (domain short form = "sfdc"), without the need for using the content path definitions to determine this domain and host.

The method of creating a short form "nickname" and embedding it in the rewritten (expanded) path allows the PRS Reverse Proxy 112 to quickly ascertain which back-end server it is actually redirecting to, by referencing an XML configuration file of which the the domain and host configuration is an excerpt (Fig. 9). This is especially useful when working with the new generation of browsers which establish a plurality of simultaneous connections in order to process requests for reading web pages.

Requests for specific content may generate relative requests that do not include the domain and host short forms. For example, if a request comes to the PRS Reverse Proxy 112 for "/spell-sjl/spellcheck.jsp", the configuration file is checked for content paths that match. If the path matches, the host and domain for that resource are used. The confusion in a multihomed system is that the relative path may belong to three or four different possible hosts.

If host and domain are thus resolved in the step 808 (exit "OK" from step 808), the domain resolution process is finished, otherwise the step 810 is executed next.

At the step 810 "Use referrer URL", the referrer URL header in the HTTP request may be used as domain and host hints. If a relative URL was invoked from a previous page, then it is likely that it is in reference to the same server. This assumption is not 100% accurate, but useful in guessing. Stored links in browser shortcuts, or manipulations from programs may cause invalid or missing referrer headers in the HTTP request.

If host and domain are thus resolved in the step 810 (exit "OK" from step 810), the domain resolution process is finished, otherwise the step 812 is executed next.

The step 812 "Last resort default" is provided as a last resort. If all previous attempts at identifying the appropriate host and domain have failed, the request will be forwarded to the www host of the application domain which is the same as the root domain.

In this way host and domain are always resolved in the default step 812 and the domain resolution process is finished. There is no failure path.

The steps 804 to 812 of resolving the URL in the header of an HTTP request is performed in a Forward URL Translator module of the PRS-RP 112 (see Forward URL Translator 1218 in Fig. 12).

The response of a forwarded HTTP request from the PRS-RP 112 to a server, will be directed to the PRS-RP 112, not the client device 110. The PRS-RP 112 then has to replace the address (URL) in the response with the URL of the client device 110 in a conventional manner (not shown in detail here). Connection state information stored in persistent storage of the PRS-RP 112 (see "Connection state information" 1224 in Fig. 12) is used to correlate the response with the request, thus providing the identity (URL) of the requesting client device 110.

The process of handling the URL transformation for the server response, that is replacing the URL in a server response, is performed in a Reverse URL Translator module of the PRS-RP 112 (see Reverse URL Translator 1220 in Fig. 12).

### Process for Preserving JavaScript URLs

The PRS Reverse Proxy 112 is designed with application context aware replacements for JavaScript calls in order to deal with dynamic URL generation.

Persistent state information and session history is created by intercepting HTML code that is sent from the service provider to the client, and storing relevant relevant data, for example JavaScript calls that directly or indirectly create a URL. For a given cloud application analysis has been done to determine those JavaScript calls that either directly or indirectly create a URL. This is a key part of being able to make the PRS Reverse Proxy 112 work with salesforce.com and other cloud applications.

A heuristics engine in the PRS Reverse Proxy 112 then changes those JavaScript calls with the local Reverse Proxy equivalent before the JavaScript is actually executed on the browser. In this way when the requests are then made from the browser, the correctly formatted URL is used.

For example, the code may contain a navigateToUrl() function. The application makes a call to this JavaScript function to change the browser URL location. This function may take arguments, for example, both a host parameter and a path parameter (e.g.. navigateToUrl(host,path)).

If the normal call that was generated in the code was, for example:
navigateToUrl('na12.salesforce.com', '/services/ui/getConfig'),
the PRS Reverse Proxy would then change the javascript call to:
   navigateToUrl('myrevproxy.yourcorp.com','/sfdc/na12/services/ui/getConfig').

Generally speaking, when any of a particular class of JavaScript functions is executed by the client 110, where the resulting action includes navigation to one of a plurality of hosts of the SP 104, the HTML code containing calls to such functions must be modified by PRS-RP 112. In order for this navigation to work properly through the PRS-RP 112, the arguments of every call to such JavaScript functions are modified to:
- replace direct URL references to hosts with the single URL of the PRS-RP 112, e.g. 'myrevproxy.yourcorp.com', and
- expand paths to identify the service provider host by prepending the short form identifying the domain, e.g. '/sfdc', and the hostname, e.g. '/na12'.

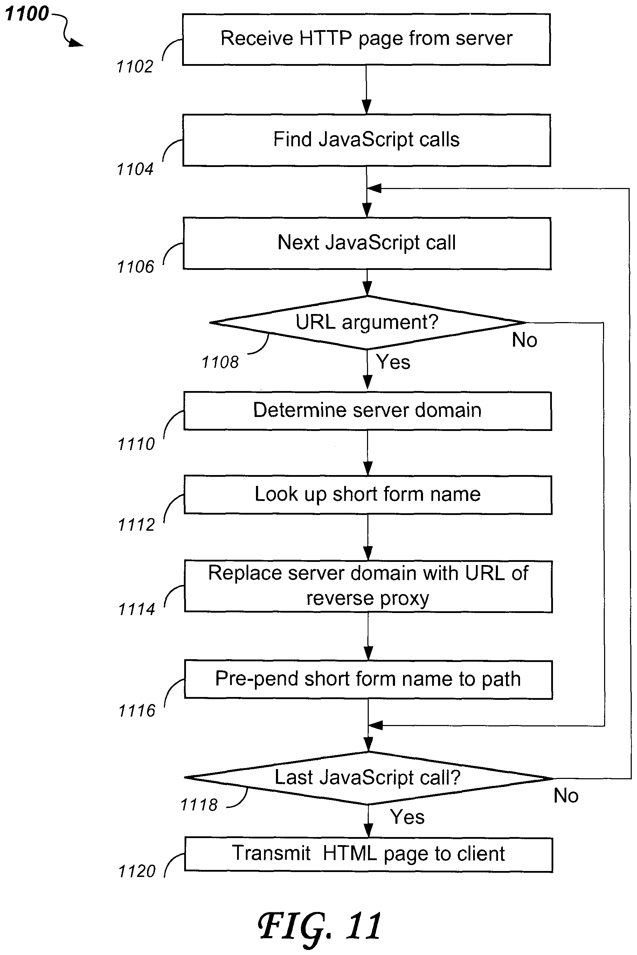

Figure 11 shows a flowchart of a Process for Preserving JavaScript URLs 1100, including steps:
1102 "Receive HTTP page from server";
1104 "Find JavaScript calls";
1106 "Next JavaScript call";
1108 "URL argument?";
1110 "Determine server domain";
1112 "Look up short form name";
1114 "Replace server domain with URL of Reverse Proxy";
1116 "Pre-pend short form name to path";
1118 "Last JavaScript call?"; and
1120 "Transmit HTML page to client".

The Process for Preserving JavaScript URLs 1100 runs in a Content Modification process (see Content Modifier 1216, Fig. 12) of the PRS Reverse Proxy 112 and, briefly summarized, modifies each HTML page received from a server (step 1102), by:
- sequentially scanning the text of the page (steps 1104 to 1118);
- finding JavaScript calls with URL arguments (steps 1106, 1108);
- changing URLs in the arguments (steps 1110 to 1116); and
- sending the modified HTML page to the client (step 1120).

The Process for Preserving JavaScript URLs 1100 is not limited to HTML. It may also be used to support JavaScript Object Notation (JSON). There are cases in Asynchronous JavaScript and XML (AJAX) technology where call responses are JSON, or even HTML embedded in parts of JSON content. The scope of the processing functions of the PRS-RP 112 is not limited by content type, but includes all standard content types that require URL re-mapping, for example XML, JSON, XHTML, Simple Object Access Protocol (SOAP) etc. It is also possible to interpret and modify requests and content of non-standard, i.e. proprietary, protocols used in certain cloud application systems.

In summary, javascript dynamic processing is performed by replacing strings as shown in the flowchart 1100 of Fig. 11. The "src" and "href" parts of all standard HTML tags are altered first. Then embedded flash urls are converted, then any javascript "window.location.href=" statements, followed by individual calls to different cloud application specific javascript calls. Some of these are simple single parameter calls. Others are multi-parameter calls where it is necessary to identify which of the parameters are in fact relative URLs that need to be changed.

Figure 12 shows a block diagram 1200 of the PRS Reverse Proxy 112, including a Processor 1202, a Computer Memory 1204, and a Persistent Storage unit 1206.

The Processor 1202 may be any commercial processor capable of executing programs under an operating system such as, but not limited to, Linux, Microsoft Windows, or Mac Operating System 10 (OSX) for example, comprising a Central Processing Unit (CPU) 1208, a Network Input/Output (I/O) system 1210 and a Command Interface 1212.

The CPU 1208 may be any of a number of commercial processor implementations, including a multi-processor. The Network Input/Output (I/O) system 1210 provides an interface facility to the Internet 108 via the optional Firewall 114, the Private Network 116, or directly to the Client 110, see Figs. 1 and 6. The Command Interface 1212 may include a keyboard, mouse, and visual interface, as well as removable storage devices, or any other hardware suitable as means for controlling a software configuration as well as the operations of the PRS Reverse Proxy 112.

The Processor 1202 is connected to the Computer Memory 1204 which is preferably a non-transitory memory device such as dynamic memory (DRAM) capable of storing software programs and related data. Software programs which include computer executable instructions are stored in the Computer Memory 1204 include: an Assertion Processing Module 1214 for revising assertions (see Fig. 4); a Content Modifier 1216 comprising programs that implement the Response Processing Function 706 of Fig. 7A, including the Process for Preserving JavaScript URLs 1100 of Fig. 11; a Forward URL Translator 1218 comprising programs that implement the Domain Resolution Method 800 of Fig. 8 to replace the URLs in requests from the client 110, as well as the Request Processing Function 704 of Fig. 7A; and a Reverse URL Translator 1220 comprising programs that implement corresponding functions for replacing explicit server URL references in responses from the servers in the SP 104 with the URL of the PRS-RP 112 and the server's short name as described above.

The Request Processing Function 704 and the Response Processing Function 706 of Fig. 7A are performed in the Forward URL Translator 1218 and the Reverse URL Translator 1220 respectively.

The Processor 1202 is also connected to the Persistent Storage unit 1206 which may be implemented in any of a number of persistent storage technologies including, but not limited to, for example a hard disk or a flash drive. Data stored in the Persistent Storage unit 1206, may be stored simultaneously in the Computer Memory 1204 for periods while it is actively being used by the processor 1202, but is also preferably stored in the Persistent Storage unit 1206 for reliability.

The Persistent Storage unit 1206 is used for storing persistent information, primarily configured information, such as Keys and Certificates in a Key Store 1222 to support the Assertion Processing module 1214 used for revising assertions (Fig. 4). The Persistent Storage unit 1206 is preferably further used for storing Connection State Information 1224, a Session History 1226 for recording session data of server applications accessed by the one or more clients 110. The Persistent Storage unit 1206 is preferably further used for storing one or more PRS-Reverse Proxy Configuration files 1228 which include for example the content paths definitions file, an excerpt of which is shown in Fig. 10 and the domain and host configuration file, an excerpt of which is shown in Fig. 9. The Assertion Processing module 1214 and the data stored in the Key Store 1222, form a first computer group of elements 1230, as indicated in Fig. 12. Programs of the Content Modifier 1216, the Forward URL Translator 1218, and the Reverse URL Translator 1220 collectively and the data stored in the Connection State Information 1224, the Session History 1226, and the Configuration files 1228, form a second group of computer elements 1232, as indicated in Fig. 12. The first group of computer elements 1230 support the operations of the single-sign-on process 200 of Fig. 2, while the second group of computer elements 1232 support operations of the multi-host Reverse Proxy system 600 of Fig. 6.

While examples used in describing embodiments of the PRS Reverse Proxy server 112 have been based on HTTP requests using HTTP GET messages, and their responses, it is understood that the described techniques for modifying URLs and addresses are equally applicable to other HTTP message forms such as HTTP POST for example, and other protocols such as XML, JSON and others as outlined above.

Although the embodiment of the invention has been described in detail, it will be apparent to one skilled in the art that variations and modifications to the embodiment may be made within the scope of the following claims.

## Claims

1. A method for providing a resource from one of a plurality of service provider (104) hosts to a client device (110) through a reverse proxy computer (112), comprising:
employing at least one processor (1202) for:
receiving a request from the client device (110) in the reverse proxy computer (112), the request having a header comprising:
a domain name of the reverse proxy computer (112);
a short form domain name representing a selected service provider (104) domain;
a short form host name representing a selected service provider (104) host in the selected service provider (104) domain; and
a path name for locating the resource on the selected service provider (104) host;
translating the short form domain name into a domain name of the selected service provider (104) host;
translating the short form host name into a host name of the selected service provider (104) host;
generating a modified request for transmission to the selected service provider (104) host, the modified request comprising: the host name, the domain name, and the path name;
receiving another request from the client in the reverse proxy (112), **characterized in that** the another request comprising a header which does not correspond to any pattern found in a configuration file (1228) of the reverse proxy (112);
resolving the another request by performing the following steps until the selected service provider (104) domain and the selected service provider (104) host for obtaining the resource are determined, comprising:
searching a short form domain name in the header and translating the short form domain name into the domain name of the selected service provider (104) host, and
provided said short form domain name is found in the configuration file (1228), searching a path name in a content paths definitions file of the reverse proxy (112) to determine the selected service provider (104) host, provided the path name is found in the content paths definitions file, thereby determining the selected service provider (104) domain and the selected service provider (104) host; and
generating a modified request for transmission to the selected service provider (104) host, the modified request comprising the domain name of the selected service provider (104) host, the host name and the path name, provided the selected service provider (104) domain and the selected service provider (104) host have been determined.

2. The method of claim 1, further comprising:
modifying a document, received in the reverse proxy (112) from the selected service provider (104) host, into a modified document, comprising:
finding a reference to the domain name of the selected service provider (104) host in the document;
replacing the reference to the domain name of the selected service provider (104) host, with the domain name of the reverse proxy (112), followed by a forward slash character and the short form name of the selected service provider (104) host; and
transmitting the modified document to the client device (110).

3. The method of claim 1,
wherein the short form domain name is an alphanumeric string preceded by a forward slash character, and the short form host name is another alphanumeric string preceded by another forward slash character;
or
wherein the request and the another request from the client device (110) are Hypertext Transfer Protocol GET messages; or
wherein the request and the another request from the client device (110) are contained in Hypertext Transfer Protocol POST messages.

4. The method of claim 2, wherein the document is:
a Hypertext Markup Language document;
or
an Extensible Markup Language document;
or
a JavaScript Object Notation document.

5. The method of claim 4, further comprising:
finding within the document a subroutine call having as arguments a Universal Resource Locator of one of the plurality of the service provider (104) hosts and a path name; and
replacing said subroutine call with a modified subroutine call, comprising:
replacing said Universal Resource Locator Universal Resource Locator with the Universal Resource Locator of the reverse proxy (112); and
generating a modified path name by inserting another forward slash character followed by the short form name of said one of the plurality of the service provider (104) hosts in front of the path name.

6. The method of claim 5, wherein the subroutine call is a JavaScript function call.

7. The method of claim 1, wherein the resolving further comprises determining both the selected service provider (104) domain and the selected service provider (104) host from a referrer Universal Resource Locator that is located in the another request, thereby finding the selected service provider (104) domain and the selected service provider (104) host.

8. The method of claim 7, wherein the resolving further comprises using a home domain of the service provider (104) as the selected service provider (104) domain and a world wide web server as the selected service provider (104) host.

9. A system (100) for providing a resource from one of a plurality of service provider (104) hosts to a client device (110) through a reverse proxy computer (112), the system (100) comprising:
means for receiving a request from the client device (110) in the reverse proxy computer (112), the request having a header comprising:
a domain name of the reverse proxy computer (112);
a short form domain name representing a selected service provider (104) domain;
a short form host name representing a selected service provider (104) host in the selected service provider (104) domain; and
a path name for locating the resource on the selected service provider (104) host;
means for translating the short form domain name into a domain name of the selected service provider (104) host;
means for translating the short form host name into a host name of the selected service provider (104) host;
means for generating a modified request for transmission to the selected service provider (104) host, the modified request comprising:
the host name, the domain name, and the path name;
means for receiving another request from the client in the reverse proxy (112), **characterized in that** the another request having a header which does not correspond to any pattern found in a configuration file (1228) of the reverse proxy (112);
means for resolving the another request by performing the following steps until the selected service provider (104) domain and the selected service provider (104) host for obtaining the resource are determined, comprising:
means for searching a short form domain name in the header and translating the short form domain name into the domain name; and
provided said short form domain name is found in the configuration file (1228), means for searching a path name in a content paths definitions file of the reverse proxy (112) to determine the selected service provider (104) host, provided the path name is found in the content paths definitions file, thereby determining the selected service provider (104) domain and the selected service provider (104) host; and
means for generating a modified request for transmission to the selected service provider (104) host, the modified request comprising the domain name, the host name and the path name, provided the selected service provider (104) domain and the selected service provider (104) host have been determined.

10. The system (100) of claim 9, further comprising:
means for modifying a document, received in the reverse proxy (112) from the selected service provider (104) host, into a modified document, comprising:
means for finding a reference to the domain name of the selected service provider (104) host in the document;
means for replacing the reference to the domain name of the selected service provider (104) host, with the domain name of the reverse proxy (112), followed by a forward slash character and the short form name of the selected service provider (104) host; and
means for transmitting the modified document to the client device.

11. The system (100) of claim 9,
wherein the short form domain name is an alphanumeric string preceded by a forward slash character, and the short form host name is another alphanumeric string preceded by another forward slash character;
or
wherein the request and the another request from the client device (110) are Hypertext Transfer Protocol GET messages; or
wherein the request and the another request from the client device (110) are contained in Hypertext Transfer Protocol POST messages.

12. The system (100) of claim 10, wherein the document is:
a Hypertext Markup Language document;
or
an Extensible Markup Language document;
or
a JavaScript Object Notation document.

13. The system (100) of claim 12, further comprising:
means for finding within the document a subroutine call having as arguments a Universal Resource Locator of one of the plurality of the service provider (104) hosts and a path name; and
means for replacing said subroutine call with a modified subroutine call, comprising:
means for replacing said Universal Resource Locator Universal Resource Locator with the Universal Resource Locator of the reverse proxy (112); and
means for generating a modified path name by inserting another forward slash character followed by the short form name of said one of the plurality of the service provider (104) hosts in front of the path name.

14. The system (100) of claim 13, wherein the subroutine call is a JavaScript function call.

15. The system (100) of claim 14, wherein the means for resolving further comprises means for determining both the selected service provider (104) domain and the selected service provider (104) host from a referrer Universal Resource Locator that is located in the another request, thereby finding the selected service provider (104) domain and the selected service provider (104) host.

16. The system (100) of claim 15, wherein the means for resolving further comprises means for using a home domain of the service provider (104) as the selected service provider (104) domain and a world wide web server as the selected service provider (104) host.

## Patentansprüche

1. Verfahren zum Bereitstellen einer Ressource von einem von mehreren Hosts eines Dienstleisters (104) für eine Klientenvorrichtung (110) durch einen Reverse-Proxy-Computer (112), das umfasst, dass:
mindestens ein Prozessor (1202) verwendet wird, um:
eine Anforderung von der Klientenvorrichtung (110) in dem Reverse-Proxy-Computer (112) zu empfangen, wobei die Anforderung einen Kennsatz aufweist, der umfasst:
einen Domänennamen des Reverse-Proxy-Computers (112);
einen Domänennamen in Kurzform, der eine gewählte Domäne des Dienstleisters (104) repräsentiert;
einen Hostnamen in Kurzform, der einen gewählten Host des Dienstleisters (104) in der gewählten Domäne des Dienstleisters (104) repräsentiert; und
einen Pfadnamen zum Lokalisieren der Ressource auf dem gewählten Host des Dienstleisters (104);
den Domänennamen in Kurzform in einen Domänennamen des gewählten Hosts des Dienstleisters (104) zu übersetzen;
den Hostnamen in Kurzform in einen Hostnamen des gewählten Hosts des Dienstleisters (104) zu übersetzen;
eine modifizierte Anforderung zur Übertragung an den gewählten Host des Dienstleisters (104) zu erzeugen, wobei die modifizierte Anforderung umfasst: den Hostnamen, den Domänennamen und den Pfadnamen;
eine weitere Anforderung von dem Klienten in dem Reverse-Proxy (112) zu empfangen,
**dadurch gekennzeichnet, dass**
die weitere Anforderung einen Kennsatz umfasst, der keinem Muster entspricht, das in einer Konfigurationsdatei (1228) des Reverse-Proxy (112) anzutreffen ist;
die weitere Anforderung aufgelöst wird, indem die folgenden Schritte ausgeführt werden, bis die gewählte Domäne des Dienstleisters (104) und der gewählte Host des Dienstleisters (104) zum Beschaffen der Ressource bestimmt worden sind, was umfasst, dass:
ein Domänenname in Kurzform in dem Kennsatz gesucht wird und der Domänenname in Kurzform in den Domänennamen des gewählten Hosts des Dienstleisters (104) übersetzt wird, und
vorausgesetzt, dass der Domänenname in Kurzform in der Konfigurationsdatei (1228) gefunden wird,
ein Pfadname in einer Datei mit Inhaltspfaddefinitionen des Reverse-Proxy (112) gesucht wird, um den gewählten Host des Dienstleisters (104) zu bestimmen,
vorausgesetzt, dass der Pfadname in der Datei mit Inhaltspfaddefinitionen gefunden wird, dadurch die gewählte Domäne des Dienstleisters (104) und der gewählte Host des Dienstleisters (104) bestimmt werden; und
eine modifizierte Anforderung zur Übertragung an den gewählten Host des Dienstleisters (104) erzeugt wird, wobei die modifizierte Anforderung den Domänennamen des gewählten Hosts des Dienstleisters (104), den Hostnamen und den Pfadnamen umfasst, vorausgesetzt, dass die gewählte Domäne des Dienstleisters (104) und der gewählte Host des Dienstleisters (104) bestimmt worden sind.

2. Verfahren nach Anspruch 1, das ferner umfasst, dass:
ein von dem gewählten Host des Dienstleisters (104) in dem Reverse-Proxy (112) empfangenes Dokument zu einem modifizierten Dokument modifiziert wird, was umfasst, dass:
ein Bezug auf den Domänennamen des gewählten Hosts des Dienstleisters (104) in dem Dokument gefunden wird;
der Bezug auf den Domänennamen des gewählten Hosts des Dienstleisters (104) durch den Domänennamen des Reverse-Proxy (112), gefolgt von einem Vorwärtsschrägstrich-Zeichen und dem Namen in Kurzform des gewählten Hosts des Dienstleisters (104) ersetzt wird; und
das modifizierte Dokument an die Klientenvorrichtung (110) übertragen wird.

3. Verfahren nach Anspruch 1,
wobei der Domänenname in Kurzform eine alphanumerische Zeichenkette ist, der ein Vorwärtsschrägstrich-Zeichen vorausgeht, und der Hostname in Kurzform eine weitere alphanumerische Zeichenkette ist, der ein weiteres Vorwärtsschrägstrich -Zeichen vorausgeht;
oder
wobei die Anforderung und die weitere Anforderung von der Klientenvorrichtung (110) GET-Botschaften des Hypertext Transfer Protocol sind;
oder
wobei die Anforderung und die weitere Anforderung von der Klientenvorrichtung (110) in POST-Botschaften des Hypertext Transfer Protocol enthalten sind.

4. Verfahren nach Anspruch 2, wobei das Dokument ist:
ein Hypertext Markup Language Dokument;
oder
ein Extensible Markup Language Dokument;
oder
ein JavaScript Object Notation Dokument.

5. Verfahren nach Anspruch 4, das ferner umfasst, dass:
in dem Dokument ein Unterprogrammaufruf gefunden wird, der als Argumente einen Universal Resource Locator von einem der mehreren Hosts des Dienstleisters (104) und einen Pfadnamen aufweist; und
der Unterprogrammaufruf durch einen modifizierten Unterprogrammaufruf ersetzt wird, was umfasst, dass:
der Universal Resource Locator Universal Resource Locator durch den Universal Resource Locator des Reverse-Proxy (112) ersetzt wird; und
ein modifizierter Pfadname erzeugt wird, indem ein weiteres Vorwärtsschrägstrich-Zeichen gefolgt von dem Namen in Kurzform des einen der mehreren Hosts des Dienstleisters (104) vordem Pfadnamen eingefügt werden.

6. Verfahren nach Anspruch 5, wobei der Unterprogrammaufruf ein JavaSkript-Funktionsaufruf ist.

7. Verfahren nach Anspruch 1, wobei das Auflösen ferner umfasst, dass sowohl die gewählte Domäne des Dienstleisters (104) als auch der gewählte Host des Dienstleisters (104) aus einem Referrer Universal Resource Locator bestimmt werden, der sich in der weiteren Anforderung befindet, wodurch die gewählte Domäne des Dienstleisters (104) und der gewählte Host des Dienstleisters (104) gefunden werden.

8. Verfahren nach Anspruch 7, wobei das Auflösen ferner umfasst, dass eine Heimatdomäne des Dienstleisters (104) als die gewählte Domäne des Dienstleisters (104) und ein WorldWideWeb-Server als der gewählte Host des Dienstleisters (104) verwendet werden.

9. System (100) zum Bereitstellen einer Ressource von einem von mehreren Hosts eines Dienstleisters (104) für eine Klientenvorrichtung (110) durch einen Reverse-Proxy-Computer (112), wobei das System (100) umfasst:
Mittel zum Empfangen einer Anforderung von der Klientenvorrichtung (110) in dem Reverse-Proxy-Computer (112), wobei die Anforderung einen Kennsatz aufweist, der umfasst:
einen Domänennamen des Reverse-Proxy-Computers (112);
einen Domänennamen in Kurzform, der eine gewählte Domäne des Dienstleisters (104) repräsentiert;
einen Hostnamen in Kurzform, der einen gewählten Host des Dienstleisters (104) in der gewählten Domäne des Dienstleisters (104) repräsentiert; und
einen Pfadnamen zum Lokalisieren der Ressourcen auf dem gewählten Host des Dienstleisters (104);
Mittel zum Übersetzen des Domänennamens in Kurzform in einen Domänennamen des gewählten Hosts des Dienstleisters (104);
Mittel zum Übersetzen des Hostnamens in Kurzform in einen Hostnamen des gewählten Hosts des Dienstleisters (104);
Mittel zum Erzeugen einer modifizierten Anforderung zur Übertragung an den gewählten Host des Dienstleisters (104), wobei die modifizierte Anforderung umfasst:
den Hostnamen, den Domänennamen und den Pfadnamen;
Mittel zum Empfangen einer weiteren Anforderung von dem Klienten in dem Reverse-Proxy (112),
**dadurch gekennzeichnet, dass** die weitere Anforderung einen Kennsatz aufweist, der keinem Muster entspricht, das in einer Konfigurationsdatei (1228) des Reverse-Proxy (112) anzutreffen ist;
Mittel zum Auflösen der weiteren Anforderung, indem die folgenden Schritte ausgeführt werden, bis die gewählte Domäne des Dienstleisters (104) und der gewählte Host des Dienstleisters (104) zum Beschaffen der Ressource bestimmt worden sind, umfassend:
Mittel zum Suchen eines Domänennamens in Kurzform in dem Kennsatz und zum Übersetzen des Domänennamens in Kurzform in den Domänennamen; und
vorausgesetzt, dass der Domänenname in Kurzform in der Konfigurationsdatei (1228) gefunden wird, Mittel zum Suchen eines Pfadnamens in einer Datei mit Inhaltspfaddefinitionen des Reverse-Proxy (112), um den gewählten Host des Dienstleisters (104) zu bestimmen, vorausgesetzt, dass der Pfadname in der Datei mit Inhaltspfaddefinitionen gefunden wird, wodurch die gewählte Domäne des Dienstleisters (104) und der gewählte Host des Dienstleisters (104) bestimmt werden; und
Mittel zum Erzeugen einer modifizierten Anforderung zur Übertragung an den gewählten Host des Dienstleisters (104), wobei die modifizierte Anforderung den Domänennamen, den Hostnamen und den Pfadnamen umfasst, vorausgesetzt, dass die gewählte Domäne des Dienstleisters (104) und der gewählte Host des Dienstleisters (104) bestimmt worden sind.

10. System (100) nach Anspruch 9, das ferner umfasst:
Mittel zum Modifizieren eines Dokuments, das in dem Reverse-Proxy (112) von dem gewählten Host des Dienstleisters (104) empfangen wurde, zu einem modifizierten Dokument, umfassend:
Mittel zum Finden eines Bezugs zu dem Domänennamen des gewählten Hosts des Dienstleisters (104) in dem Dokument;
Mittel zum Ersetzen des Bezugs zu dem Domänennamen des gewählten Hosts des Dienstleisters (104) durch den Domänennamen des Reverse-Proxy (112), gefolgt von einem Vorwärtsschrägstrich-Zeichen und dem Namen in Kurzform des gewählten Hosts des Dienstleisters (104); und
Mittel zum Übertragen des modifizierten Dokuments an die Klientenvorrichtung.

11. System (100) nach Anspruch 9,
wobei der Domänenname in Kurzform eine alphanumerische Zeichenkette ist, der ein Vorwärtsschrägstrich-Zeichen vorausgeht, und der Hostname in Kurzform eine weitere alphanumerische Zeichenkette ist, der ein weiteres Vorwärtsschrägstrich -Zeichen vorausgeht;
oder
wobei die Anforderung und die weitere Anforderung von der Klientenvorrichtung (110) GET-Botschaften des Hypertext Transfer Protocol sind;
oder
wobei die Anforderung und die weitere Anforderung von der Klientenvorrichtung (110) in POST-Botschaften des Hypertext Transfer Protocol enthalten sind.

12. System (100) nach Anspruch 10, wobei das Dokument ist:
ein Hypertext Markup Language Dokument;
oder
ein Extensible Markup Language Dokument;
oder
ein JavaScript Object Notation Dokument.

13. System (100) nach Anspruch 12, das ferner umfasst:
Mittel zum Finden eines Unterprogrammaufrufs in dem Dokument, der als Argumente einen Universal Resource Locator von einem der mehreren Hosts des Dienstleisters (104) und einen Pfadnamen aufweist; und
Mittel zum Ersetzen des Unterprogrammaufrufs durch einen modifizierten Unterprogrammaufruf, umfassend:
Mittel zum Ersetzen des Universal Resource Locator Universal Resource Locator durch den Universal Resource Locator des Reverse-Proxy (112); und
Mittel zum Erzeugen eines modifizierten Pfadnamens durch Einfügen eines weiteren Vorwärtsschrägstrich-Zeichens gefolgt von dem Namen in Kurzform des einen der mehreren Hosts des Dienstleisters (104) vordem Pfadnamen.

14. System (100) nach Anspruch 13, wobei der Unterprogrammaufruf ein JavaSkript-Funktionsaufruf ist.

15. System (100) nach Anspruch 14, wobei das Mittel zum Auflösen ferner Mittel zum Bestimmen sowohl der gewählten Domäne des Dienstleisters (104) als auch des gewählten Hosts des Dienstleisters (104) von einem Referrer Universal Resource Locator umfasst, der sich in der anderen Anforderung befindet, wodurch die gewählte Domäne des Dienstleisters (104) und der gewählte Host des Dienstleisters (104) gefunden werden.

16. System (100) nach Anspruch 15, wobei das Mittel zum Auflösen ferner Mittel zum Verwenden einer Heimatdomäne des Dienstleisters (104) als die gewählte Domäne des Dienstleisters (104) und einen WorldWideWeb-Server als den gewählten Host des Dienstleisters (104) umfasst.

## Revendications

1. Procédé pour fournir une ressource à partir de l'un d'une pluralité d'hôtes de fournisseurs de service (104) à un dispositif client (110) par l'intermédiaire d'un ordinateur proxy inverse (112), comprenant les étapes consistant à :
utiliser au moins un processeur (1202) pour :
recevoir une requête du dispositif client (110) dans l'ordinateur proxy inverse (112),
la requête ayant un en-tête comprenant :
un nom de domaine de l'ordinateur proxy inverse (112) ;
un nom de domaine abrégé représentant un domaine du fournisseur de service (104) sélectionné ;
un nom d'hôte abrégé représentant un hôte du fournisseur de service (104) sélectionné dans le domaine du fournisseur de service (104) sélectionné ; et
un nom de chemin pour localiser la ressource sur l'hôte du fournisseur de service (104) sélectionné ;
traduire le nom de domaine abrégé en un nom de domaine de l'hôte du fournisseur de service (104) sélectionné ;
traduire le nom d'hôte abrégé en un nom d'hôte de l'hôte du fournisseur de service (104) sélectionné ;
générer une requête modifiée pour transmission à l'hôte du fournisseur de service (104) sélectionné, la requête modifiée comprenant : le nom d'hôte, le nom de domaine et le chemin d'accès ;
recevoir une autre requête du client dans le proxy inverse (112), **caractérisé en ce que** l'autre requête comprend un en-tête qui ne correspond à aucun motif trouvé dans un fichier de configuration (1228) du proxy inverse (112) ;
résoudre l'autre requête en effectuant les étapes suivantes jusqu'à ce que le domaine du fournisseur de service (104) sélectionné et l'hôte du fournisseur de service (104) sélectionné pour obtenir la ressource soient déterminés, consistant à :
rechercher un nom de domaine abrégé dans l'en-tête et traduire le nom de domaine abrégé en nom de domaine de l'hôte du fournisseur de service (104) sélectionné et, à condition que ledit nom de domaine abrégé soit trouvé dans le fichier de configuration (1228),
rechercher un nom de chemin dans un fichier de définitions de chemins de contenu du proxy inverse (112) pour déterminer l'hôte du fournisseur de service (104) sélectionné, à condition que le nom de chemin soit trouvé dans le fichier de définitions de chemins de contenu, déterminant ainsi le domaine du fournisseur de service (104) sélectionné et l'hôte du fournisseur de service (104) sélectionné ; et
générer une requête modifiée pour transmission à l'hôte du fournisseur de service (104) sélectionné, la requête modifiée comprenant le nom de domaine de l'hôte du fournisseur de service (104) sélectionné, le nom d'hôte et le nom de chemin, à condition que le domaine du fournisseur de service (104) sélectionné et l'hôte du fournisseur de service (104) sélectionné aient été déterminés.

2. Procédé selon la revendication 1, comprenant en outre les étapes consistant à :
modifier un document, reçu dans le proxy inverse (112) de l'hôte du fournisseur de service (104) sélectionné, en un document modifié, consistant à :
trouver une référence au nom de domaine de l'hôte du fournisseur de service (104) sélectionné dans le document ;
remplacer la référence au nom de domaine de l'hôte du fournisseur de service (104) sélectionné par le nom de domaine du proxy inverse (112), suivi par une barre oblique avant et le nom abrégé de l'hôte du fournisseur de service (104) sélectionné ; et
transmettre le document modifié au dispositif client (110).

3. Procédé selon la revendication 1,
dans lequel le nom de domaine abrégé est une chaîne alphanumérique précédée d'une barre oblique avant et le nom d'hôte abrégé est une autre chaîne alphanumérique précédée d'une autre barre oblique avant ;
ou
dans lequel la requête et l'autre requête provenant du dispositif client (110) sont des messages GET du protocole Hypertext Transfer Protocol (HTTP) ;
ou
dans lequel la requête et l'autre requête provenant du dispositif client (110) sont contenues dans des messages POST du protocole HTTP.

4. Procédé selon la revendication 2, dans lequel le document est :
un document Hypertext Markup Language (HTML) ;
ou
un document Extensible Markup Language (XML) ;
ou
un document JavaScript Object Notation (JSON).

5. Procédé selon la revendication 4, comprenant en outre les étapes consistant à :
trouver dans le document un appel de sous-programme ayant comme arguments un localisateur de ressources universel (Universal Resource Locator, URL) de l'un de la pluralité d'hôtes de fournisseurs de service (104) et un nom de chemin ; et
remplacer ledit appel de sous-programme par un appel de sous-programme modifié, consistant à :
remplacer ledit localisateur de ressources universel par le localisateur de ressources universel du proxy inverse (112) ; et
générer un nom de chemin modifié en insérant une autre barre oblique avant suivie par le nom abrégé dudit un de la pluralité d'hôtes de fournisseurs de service (104) devant le nom de chemin.

6. Procédé selon la revendication 5, dans lequel l'appel de sous-programme est un appel de fonction JavaScript.

7. Procédé selon la revendication 1, dans lequel l'étape consistant à résoudre consiste en outre à déterminer le domaine du fournisseur de service (104) sélectionné et l'hôte du fournisseur de service (104) sélectionné à partir d'un localisateur de ressources universel de référence qui est situé dans l'autre requête, trouvant ainsi le domaine du fournisseur de service (104) sélectionné et l'hôte du fournisseur de service (104) sélectionné.

8. Procédé selon la revendication 7, dans lequel l'étape consistant à résoudre consiste en outre à utiliser un domaine d'origine du fournisseur de service (104) en tant que domaine du fournisseur de service (104) sélectionné et un serveur world wide web (WWW) en tant qu'hôte du fournisseur de service (104) sélectionné.

9. Système (100) pour fournir une ressource à partir de l'un d'une pluralité d'hôtes de fournisseurs de service (104) à un dispositif client (110) par l'intermédiaire d'un ordinateur proxy inverse (112), le système (100) comprenant :
un moyen pour recevoir une requête du dispositif client (110) dans l'ordinateur proxy inverse (112), la requête ayant un en-tête comprenant :
un nom de domaine de l'ordinateur proxy inverse (112) ;
un nom de domaine abrégé représentant un domaine du fournisseur de service (104) sélectionné ;
un nom d'hôte abrégé représentant un hôte du fournisseur de service (104) sélectionné dans le domaine du fournisseur de service (104) sélectionné ; et
un nom de chemin pour localiser la ressource sur l'hôte du fournisseur de service (104) sélectionné ;
un moyen pour traduire le nom de domaine abrégé en un nom de domaine de l'hôte du fournisseur de service (104) sélectionné ;
un moyen pour traduire le nom d'hôte abrégé en un nom d'hôte de l'hôte du fournisseur de service (104) sélectionné ;
un moyen pour générer une requête modifiée pour transmission à l'hôte du fournisseur de service (104) sélectionné, la requête modifiée comprenant :
le nom d'hôte, le nom de domaine et le nom de chemin ;
un moyen pour recevoir une autre requête du client dans le proxy inverse (112), **caractérisé en ce que** l'autre requête présente un en-tête qui ne correspond à aucun motif trouvé dans un fichier de configuration (1228) du proxy inverse (112) ;
un moyen pour résoudre l'autre requête en effectuant les étapes suivantes jusqu'à ce que le domaine du fournisseur de service (104) sélectionné et l'hôte du fournisseur de service (104) sélectionné pour obtenir la ressource soient déterminés, comprenant :
un moyen pour rechercher un nom de domaine abrégé dans l'en-tête et traduire le nom de domaine abrégé en nom de domaine ; et
à condition que ledit nom de domaine abrégé soit trouvé dans le fichier de configuration (1228), un moyen pour rechercher un nom de chemin dans un fichier de définitions de chemins de contenu du proxy inverse (112) pour déterminer l'hôte du fournisseur de service (104) sélectionné, à condition que le nom de chemin soit trouvé dans le fichier de définitions de chemins de contenu, déterminant ainsi le domaine du fournisseur de service (104) sélectionné et l'hôte du fournisseur de service (104) sélectionné ; et
un moyen pour générer une requête modifiée pour transmission à l'hôte du fournisseur de service (104) sélectionné, la requête modifiée comprenant le nom de domaine, le nom d'hôte et le nom de chemin, à condition que le domaine du fournisseur de service (104) sélectionné et l'hôte du fournisseur de service (104) sélectionné aient été déterminés.

10. Système (100) selon la revendication 9, comprenant en outre :
un moyen pour modifier un document, reçu dans le proxy inverse (112) de l'hôte du fournisseur de service (104) sélectionné, en un document modifié, comprenant :
un moyen pour trouver une référence au nom de domaine de l'hôte du fournisseur de service (104) sélectionné dans le document ;
un moyen pour remplacer la référence au nom de domaine de l'hôte du fournisseur de service (104) sélectionné, par le nom de domaine du proxy inverse (112), suivi par une barre oblique avant et le nom abrégé de l'hôte du fournisseur de service (104) sélectionné ; et
un moyen pour transmettre le document modifié au dispositif client.

11. Système (100) selon la revendication 9,
dans lequel le nom de domaine abrégé est une chaîne alphanumérique précédée d'une barre oblique avant et le nom d'hôte abrégé est une autre chaîne alphanumérique précédée d'une autre barre oblique avant ;
ou
dans lequel la requête et l'autre requête provenant du dispositif client (110) sont des messages GET du protocole Hypertext Transfer Protocol (HTTP) ;
ou
dans lequel la requête et l'autre requête provenant du dispositif client (110) sont contenues dans des messages POST du protocole HTTP.

12. Système (100) selon la revendication 10, dans lequel le document est :
un document Hypertext Markup Language (HTML) ;
ou
un document Extensible Markup Language (XML) ;
ou
un document JavaScript Object Notation (JSON).

13. Système (100) selon la revendication 12, comprenant en outre :
un moyen pour trouver dans le document un appel de sous-programme ayant comme arguments un localisateur de ressources universel (Universal Resource Locator, URL) de l'un de la pluralité d'hôtes de fournisseurs de service (104) et un nom de chemin ; et
un moyen pour remplacer ledit appel de sous-programme par un appel de sous-programme modifié, comprenant :
un moyen pour remplacer ledit localisateur de ressources universel par le localisateur de ressources universel du proxy inverse (112) ; et
un moyen pour générer un nom de chemin modifié en insérant une autre barre oblique avant suivie par le nom abrégé dudit un de la pluralité d'hôtes de fournisseurs de service (104) devant le nom de chemin.

14. Système (100) selon la revendication 13, dans lequel l'appel de sous-programme est un appel de fonction JavaScript.

15. Système (100) selon la revendication 14, dans lequel le moyen pour résoudre comprend en outre un moyen pour déterminer le domaine du fournisseur de service (104) sélectionné et l'hôte du fournisseur de service (104) sélectionné à partir d'un localisateur de ressources universel de référence qui est situé dans l'autre requête, trouvant ainsi le domaine du fournisseur de service (104) sélectionné et l'hôte du fournisseur de service (104) sélectionné.

16. Système (100) selon la revendication 15, dans lequel le moyen pour résoudre comprend en outre un moyen pour utiliser un domaine d'origine du fournisseur de service (104) en tant que domaine du fournisseur de service (104) sélectionné et un serveur world wide web (WWW) en tant qu'hôte du fournisseur de service (104) sélectionné.
